# EUROPÄISCHE PATENTSCHRIFT

(11) **EP 4 538 484 B1**
(45) Veröffentlichungstag und Bekanntmachung des Hinweises auf die Patenterteilung: **25.02.2026**
(21) Anmeldenummer: 23203514.7
(22) Anmeldetag: 13.10.2023
(51) Int. Cl.: E04H 5/02, C12C 11/00, C12C 13/00, C12C 13/10

(54) **ANLAGE ZUM HERSTELLEN VON BIER ODER EINEM ANDEREN GETRÄNK UND EINES PROTEINHALTIGEN PRODUKTES**
INSTALLATION FOR PRODUCING BEER OR ANOTHER BEVERAGE AND A PROTEIN CONTAINING PRODUCT
INSTALLATION POUR LA PRODUCTION DE BIÈRE OU D'UNE AUTRE BOISSON ET D'UN PRODUIT PROTÉIQUE

(43) Veröffentlichungstag der Anmeldung: 16.04.2025
(73) Patentinhaber: EAT BEER Biotech GmbH, 18439 Stralsund (DE)
(72) Erfinder: Reineke-Lautenbacher, Jens, 18439 Stralsund (DE); Nordmann, Jan Malte, 18573 Rambin (DE); Nordmann, Jürgen, 18573 Rambin (DE)
(74) Vertreter: Hauck Patent- und Rechtsanwälte PartmbB

(56) Entgegenhaltungen:
- EP-B1- 0 087 139
- EP-B1- 3 655 520
- WO-A1-2023/026072
- DE-A1- 102011 053 469
- DR ANDREAS F�RSTER: "Modular Plants - Flexible chemical production by modularization and standardization - status quo and future trends", INTERNET CITATION, 1 December 2016 (2016-12-01), pages 1 - 33, XP002809815, Retrieved from the Internet <URL:https://dechema.de/dechema_media/modularplants.pdf> [retrieved on 20240227]
- AHLBORN JENNY ET AL: "Upcycling of food industry side streams by basidiomycetes for production of a vegan protein source", vol. 8, no. S1, 1 December 2019 (2019-12-01), London, UK, pages 447 - 455, XP055909719, ISSN: 2195-3228, Retrieved from the Internet <URL:http://link.springer.com/article/10.1007/s40093-019-00317-4/fulltext.html> DOI: 10.1007/s40093-019-00317-4

## Beschreibung

Die Erfindung betrifft eine Anlage zum Herstellen von Bier oder einem anderen Getränk und eines proteinhaltigen Produktes auf der Basis von Getreide als Einsatzstoff.

Beim Brauen von Bier wird zunächst aus Gerste oder anderem Getreide Malz hergestellt. Durch Mälzen werden Enzyme freigesetzt, die aus der Stärke des Korns Malzzucker für die spätere Vergärung erzeugen. Hierzu ist der Maischprozess erforderlich. Beim Maischen werden das vermälzte und geschrotete Getreide mit Brauwasser unter Rühren vermischt und erhitzt, die Stärke durch die Enzyme in Malzzucker (Maltose) umgewandelt und die Malzinhaltsstoffe als Extrakt gewonnen. Die flüssige Bierwürze wird durch Abläutern im Läuterbottich oder Maischefilter bei Temperaturen von 72 bis 80 °C von den festen Bestandteilen der Maische getrennt, dem sogenannten Biertreber. Das Hauptprodukt für die Bierherstellung ist die Bierwürze. Diese wird gekocht und mit Hopfen versetzt, sodass sich dessen Aromastoffe lösen. Das Kochen bewirkt auch, dass die Bierwürze keimfrei wird. Nach Klärung der Bierwürze wird durch Abkühlen und Zusatz von Hefe der Gärprozess eingeleitet. Bei der Gärung wird Malzzucker in Alkohol und Kohlensäure umgewandelt. Die weitere Behandlung des bei der Bierherstellung in großen Mengen anfallenden Trebers stellt vor allem für kleine und mittelständische Brauereien ein Problem dar. Der aus dem Läuterbottich entnommene Biertreber weist eine kurze mikrobiologische Haltbarkeit von nur wenigen Tagen auf. Der Biertreber wird als Futtermittel in der Milchviehwirtschaft und der Rindermast, als Dünger, für die Strom- und Wärmegewinnung mittels Biogasanlagen und in getrocknetem Zustand für die Wärmeerzeugung durch Verbrennung in Kombination mit Holzhackschnitzeln genutzt.

Bereits bekannt ist die Produktion von Proteinen für die menschliche Ernährung mithilfe von Pilzen. So wurden beispielsweise Hefen für die Proteinherstellung eingesetzt. Unter dem Handelsnamen Quorn^{™} wird ein aus dem fermentierten Mycel des Schimmelpilzes (Ascomyceten) Fusarium venenatum hergestelltes Fleischersatzprodukt vermarktet.

In Indonesien wird durch Beimpfung gekochter Sojabohnen mit verschiedenen Rhizopus-Arten das traditionelle Fermentationsprodukt "'Tempeh" erzeugt. Bei den Pilzen handelt es sich um Schimmelpilze aus der Abteilung der Jochpilze. Die fermentierte Masse wird in Stücke geschnitten, gebraten und verzehrt. Durch die Fermentation werden die Proteine der Sojabohnen aufgewertet und verdauungsschädliche Bestandteile abgebaut.

Seit einigen Jahren gibt es Bestrebungen, klassische Speisepilze aus der Klasse der Basidiomyceten für die Produktion von Proteinen und/oder Aromastoffen einzusetzen, da diese einen hohen Proteinanteil aufweisen, vielfältige Aromen ausbilden und das Pilzprotein eine hohe biologische Wertigkeit aufweist.

In einem Fachartikel ist die Herstellung von Proteinen durch Fermentation von Nebenströmen aus der Nahrungsmittelindustrie mittels Basidiomyceten beschrieben (Zorn, H. et al. Upcycling of Food Industry Side Streams by Basidiomycetes for Production of a Vegan Proteine Source, International Journal of Recycling of Organic Waste in Agriculture 2019, 8:447 - 445). Der Nährwert von Apfeltrester wurde durch Fermentation mit dem Pilz Pleurotus sapidus stark erhöht und die resultierende Biomasse wurde als geeignete alternative Proteinquelle angesehen. Der Aminosäureanteil wurde von ungefähr 5% beim Apfeltrester auf 24% beim fermentierten Apfeltrester erhöht und der fermentierte Apfeltrester wies eine hohe biologische Wertigkeit von 86 auf und hierdurch wird ein guter Nährwert für Menschen indiziert.

In einem weiteren Fachartikel (Zorn, H. et al. Characterization of the Nutritional Composition of a Biotechnologically Produced Oyster Mushroom and its Physiological Effects in Obese Zucker Rats, Mol. Nutr. Food Res. 2020, 64) sind physiologische (antisteatotische und entzündungshemmende) Effekte einer Nährstoffzusammensetzung eines biotechnologisch produzierten Austernpilzes bei Untersuchungen am Rattenmodell beschrieben.

In einem weiteren Fachartikel (Aggelopoulos T. et al: Upgrading of Mixed Food Industry Side-Streams by Solid State Fermentation with P. ostreatus", Recycling, Bd. 3, Nr. 2, 1. April 2018, Seite 12) ist die Herstellung eines proteinhaltigen Pilzmycels mithilfe des Basidiomyceten Pleurotus ostreatus durch Fermentieren eines Substratgemisches aus agroindustriellen Nebenströmen und Abfällen beschrieben, die Biertreber, Malzspelzen, Käsemolke, Molasse, Orange und Tomatenmark umfassen. Die Verwendung einer Mischung zielt darauf ab, die Entsorgung der verschiedenen agroindustriellen Nebenströme und Abfälle zu vermeiden und ihre unterschiedlichen Wirkungen auf die Fermentation zu nutzen, um kostengünstig Proteine herzustellen und Abfälle aufzuwerten und zu minimieren. Die Bestandteile der Substratmischungen werden von verschiedenen Quellen bezogen: Käsemolke von einer Agrarkooperativen, Molasse von einer Alkoholbrennerei, Biertreber und Malzspelzen von einer Bierbrauerei, Tomaten und Orangen vom lokalen Markt. Im Labor werden 25 verschiedene Zusammensetzungen gemischt, die Substratgemische bei 120°C über 15 Minuten sterilisiert und die verschiedenen Substratgemische mithilfe von P. ostreatus emers fermentiert. Nachteilig ist die aufwändige Zusammenstellung der Substratgemische und Sterilisation vor dem Fermentieren.

Gemäß einem weiteren Fachartikel (Ahlborn, J. et al. "Upcycling of food industry side streams by basidiomycetes for production of a vegan protein source", International Journal of Recycling of Organic Waste in Agriculture", Bd. 8, Nr. S1, 1. Dezember 2019, Seiten 447-455) wird Apfelmark mithilfe von Pleurotus sapidus fermentiert und ein proteinreiches Mycel erzeugt. Die Fermentation wird im Labor in Schüttelflaschen durchgeführt.

In der WO 2013/034613 A2 ist ein Verfahren zur Herstellung eines Getränks oder einer Getränkebase beschrieben, bei dem in wenigstens einem Fermentationsprozess ein Medium fermentiert wird, das pumpbar ist, und bei dem der Fermentationprozess aerob durchgeführt wird, wobei das Medium durch Mycel von wenigstens einem Basidiomyceten fermentiert wird. Bei einem Ausführungsbeispiel wird ungehopfte Bierwürze mit dem Mycel der Basidiomyceten Ischnoderma benzoinum, Tyromyces chioneus und Wolfiporia cocos fermentiert. Das Mycel des Basidiomyceten wird durch Zentrifugieren abgetrennt und die restliche Probe sensorisch beurteilt. Es wird festgestellt, dass nach aerober Fermentation von ungehopfter Bierwürze ansprechend riechende und gut schmeckende Getränke erhalten werden, die sich deutlich von nicht fermentierter Bierwürze unterscheiden. Diese Verwendung der Bierwürze für die Getränkeherstellung konkurriert mit ihrer Verwendung für die Bierherstellung.

Die EP 3 655 520 B1 beschreibt die Herstellung eines Proteinproduktes aus Basidiomyceten-Submersfermentation aus einem Substrat, wie z.B. Biertreber.

Die EP 0 087 139 B1 beschreibt eine komplette Brauanlage in Form von Containern,

Der internationalen Patentanmeldung PCT/EP2023/059727, die unter Art. 54 (3) EPÜ fällt, liegt die Aufgabe zugrunde, die Herstellung von Bier oder eines anderen Getränks auf der Basis von Getreide mit der Herstellung anderer Produkte mit hohem Nährwert zu kombinieren und hierbei die Ausgangsstoffe besser auszunutzen und insgesamt eine verbesserte Ökobilanz zu erzielen. Hierzu wird als Einsatzstoff Maische aus vermälztem und/oder unvermälztem Getreide hergestellt und die Maische in eine erste Stofffraktion mit geringem Feststoffgehalt und in eine zweite Stofffraktion mit hohem Feststoffgehalt fraktioniert. Die erste Stofffraktion wird für die Herstellung von Bier oder einem anderen Getränk eingesetzt und die zweite Stofffraktion wird mit einem Pilzinokulat von Basidiomyceten inokuliert. Die inokulierte Stofffraktion wird fermentiert und ein Proteine enthaltendes Pilzmycel gebildet. Gemäß einem Ausführungsbeispiel werden hinter dem Maischbottich in einem Läuterbottich bzw. Läutergerät Bierwürze und Treber voneinander getrennt und gabelt sich der Prozess in zwei Stränge auf. In dem einen Strang wird mittels der Bierwürze Bier hergestellt. In dem anderen Strang wird mittels des Trebers Pilzmycel hergestellt.

Der vorliegenden Erfindung liegt die Aufgabe zugrunde, die Herstellung von Bier oder eines anderen Getränks auf der Basis von Getreide mit der Herstellung anderer Produkte mit hohem Nährwert zu kombinieren und hierbei die Ausgangsstoffe besser auszunutzen und insgesamt eine verbesserte Ökobilanz zu erzielen. Die kombinierte Herstellung des Getränks und anderer Produkte mit hohem Nährwert soll schnell und flexibel und unter möglichst geringem Eingriff in eine vorhandene Getränkeproduktion ausführbar sein.

Die Aufgabe wird durch eine Anlage zum Herstellen von Bier oder einem anderen Getränk und eines proteinhaltige Produktes gemäß Anspruch 1 gelöst. Vorteilhafte Ausführungsarten der Anlage sind in Unteransprüchen und in der Beschreibung angegeben.

Die erfindungsgemäße Anlage zum Herstellen von Bier oder einem anderen Getränk und eines proteinhaltigen Produktes auf der Basis von Getreide weist folgende Bestandteile auf:
- eine Brauanlage, umfassend eine Einrichtung zum Herstellen einer Maische aus vermälztem und/oder unvermälztem Getreide, eine Einrichtung zum Fraktionieren der Maische in eine erste Stofffraktion mit geringem Feststoffgehalt und in eine zweite Stofffraktion mit hohem Feststoffgehalt, eine Einrichtung zum Herstellen von Bier oder einem anderen Getränk aus der ersten Stofffraktion und einem Ausgang für die zweite Stofffraktion,
- eine Fermentationsanlage zum Herstellen eines proteinhaltigen Produktes auf der Basis von Getreide, umfassend einen Eingang für die zweite Stofffraktion, eine Einrichtung zum Inokulieren der zweiten Stofffraktion mit einem Pilzinokulat von Basidiomyceten und eine Einrichtung zum Fermentieren der inokulierten Stofffraktion in einer Submerskultur,
- eine Einrichtung zum Transportieren der zweiten Stofffraktion vom Ausgang der Brauanlage zum Eingang der Fermentationsanlage,
- wobei die Fermentationsanlage zumindest teilweise in einem oder mehreren Containern untergebracht ist und
- die Brauanlage eine ortsfeste Brauanlage ist.

Erfindungsgemäß wird eine Stofffraktion mit hohem Feststoffgehalt aus der Maische eines Brauprozesses oder eines anderen Verfahrens zum Herstellen von Getränken auf der Basis von Getreide für die Herstellung eines protein- und/oder aromastoffhaltigen Produktes mit Hilfe von Pilzen aus der Klasse der Basidiomyceten herangezogen. Bei den herkömmlichen Verfahren zum Herstellen von Bier oder anderen Getränken über eine Maische aus vermälztem und/oder unvermälztem Getreide wird das Getreide nur teilweise zu für den Menschen verwertbaren Stoffen verarbeitet. So bauen die beim Bierbrauen verwendeten Hefen das vermälzte Getreide bzw. die daraus gewonnene Bierwürze nur teilweise in für den Menschen verdaubare Stoffe um. Die Erfindung macht sich zu Nutze, dass die beim Bierbrauen nicht von den Hefen verwertbaren Bestandteile wie Zellulose und Hemizellulose mit Hilfe von Basidiomyceten zu vom Menschen verdaubaren Proteinen umgewandelt werden können. Dabei ist von Vorteil, dass die dem Verfahren zugeführten Ausgangsstoffe von einer für die Herstellung von Bier oder anderen Getränken geeigneten Qualität sind, sodass sie sich grundsätzlich auch für die Herstellung von Lebensmitteln und von anderen vom Menschen zu konsumierenden Produkten eignen. Bei dem Verfahren wird die Maische in eine erste Stofffraktion mit geringem Feststoffgehalt (z.B. Bierwürze) und in eine zweite Stofffraktion mit hohem Feststoffgehalt (z.B. Biertreber) fraktioniert, die erste Stofffraktion für die Herstellung von Bier oder anderen Getränken und die zweite Stofffraktion für die Herstellung von proteinreichem Pilzmycel eingesetzt. Das proteinreiche Pilzmycel enthält verschiedene Proteine als Bestandteile der Zellen. Bei der herkömmlichen Bierherstellung wird die beim Abläutern der Bierwürze anfallende Stofffraktion mit hohem Feststoffgehalt als Biertreber in großen Silos zwischengelagert und überwiegend zur Verwendung als Tierfutter an die Agrarwirtschaft abgegeben. Die Stofffraktion mit hohem Feststoffgehalt ist jedoch aufgrund ihrer Herstellung unter Verwendung von für die Erzeugung von Nahrungsmitteln geeigneten Einsatzstoffen, ihrer stofflichen Zusammensetzung, ihres großen Mengenanteils und ihrer einheitlichen Zusammensetzung und grundsätzlich hohen Qualität besonders für die Herstellung von Proteinen für die Aufnahme durch den Menschen geeignet.

Basidiomyceten (Ständerpilze) umfassen die für den Menschen zum Verzehr geeigneten essbaren Ständerpilze. Sie verfügen über ein sehr breites biochemisches Transformationspotential und unterscheiden sich hierdurch von niederen Pilzen und Bakterien. Erfindungsgemäß wird dieses Potential dafür genutzt, Proteine mit einer hohen biologischen Wertigkeit zur Verfügung zu stellen.

Basidiomyceten sind in der Lage, proteinreiche Pilzmycele zu bilden, deren Proteine eine hohe biologische Wertigkeit aufweisen können. Untersuchungen haben gezeigt, dass mittels Basidiomyceten fermentierter Treber eine besonders hohe biologische Wertigkeit von über 90 aufweist und deshalb besonders gut vom Menschen verwertet werden kann. Die biologische Wertigkeit der Pilzproteine ist mit der von Rindfleisch vergleichbar und weitaus größer als bei pflanzlichen Proteinen oder fermentiertem Apfeltrester.

Die biologische Wertigkeit ist ein Maßstab für die Beurteilung der Proteinqualität und gibt an, wieviel g Körperprotein durch 100 g des betreffenden Nahrungsproteins aufgebaut werden können.

Ein weiterer Vorteil der Erfindung ist, dass es eine hohe Biokonversionsrate von mindestens 10% bis zu 90 % aufweist. Die Biokonversionsrate gibt den Anteil des als Kultursubstrat verwendeten Nährmediums an, der mithilfe des Pilzes aus der Klasse der Basidiomyceten zu dem proteinreichen Pilzmycel verstoffwechselt wird.

Erfindungsgemäß ist die Gesamtausbeute hinsichtlich des vermälzten und/oder unvermälzten Getreides gegenüber herkömmlichen Verfahren stark verbessert.

Zudem können die Fermentationsprodukte von Basidiomyceten Aromastoffe mit vielfältigen Geschmacks- und/oder Geruchsaromen enthalten, beispielsweise Aromastoffe z.B. mit Frucht-, Beeren-, Kräuter-, Gewürz-, fleischigen und/oder fischigen Aromanoten. Untersuchungen im Rahmen der Erfindung haben gezeigt, dass bei der Fermentation von Trebern mittels Basidiomyceten besonders ansprechende Aromastoffe erzeugt werden. Darüber hinaus kann das durch Fermentation erhaltene Produkt für die Ernährung des Menschen wichtige Vitamine enthalten, die im Getreide nicht vorkommen.

Als Aromastoffe werden flüchtige Verbindungen in Lebensmitteln bezeichnet, die mit den Geruchsrezeptoren wahrgenommen werden können. Die Aromastoffe gelangen entweder direkt durch die Nase (Riechen, nasale Wahrnehmung) oder über den Rachenraum beim Essen oder Trinken (retronasale Wahrnehmung) zu den Rezeptoren. Die Aromastoffe sind zusammen mit definitionsgemäß nicht flüchtigen Geschmacksstoffen (sauer, süß, bitter, salzig oder umami schmeckende Verbindungen) maßgeblich am Aroma eines Lebensmittels beteiligt. Die Textur trägt ebenfalls zum sensorischen Gesamteindruck (*"Flavour"*) bei. Infolge moderner Methoden zur Isolierung und Identifizierung flüchtiger Verbindungen in Lebensmitteln sind inzwischen in der Literatur über 7.000 Aromastoffe beschrieben (vgl. Hartmann-Schreier J., Aromastoffe, RD-01-03286 [2003] in Böckler F., Dill B., Eisenbrand G., Faupel F., Fugmann B., Gamse T., Matissek R., Pohnert G., Rühling A., Schmidt S., Sprenger G., Römpp (Online), Stuttgart, Georg Thieme-Verlag, [März 2023]).

Erfindungsgemäß werden wertvolle Rohstoffe für die Herstellung von Bier oder anderen Getränken auf der Basis von Getreide zusätzlich für die Herstellung von ernährungsphysiologisch, gustatorisch und olfaktorisch besonders wirksamen und interessanten Produkten genutzt. Neben den vorgenannten vorteilhaften Effekten können mittels Basidiomyceten hergestellte protein- und/oder aromastoffhaltige Pilzmycele entzündungshemmende oder andere gesundheitsfördernde Wirkungen haben. Das Pilzmycel kann als Endprodukt oder Rohstoff zur weiteren Verarbeitung verwendet sowie als vegane Fleischalternative genutzt werden.

Der CO₂-Fußabdruck der Proteinherstellung ist weitaus kleiner als bei der Fleischerzeugung. Die Ökobilanz des Gesamtverfahrens ist besser als die Gesamtbilanz der herkömmlichen Herstellung von Bier oder anderer Getränke auf der Basis von Getreide und der Herstellung von herkömmlichen Produkten, die von den protein- und/oder aromastoffhaltigen Produkten substituiert werden.

Erfindungsgemäß wird eine Brauanlage, die herkömmlich ausgeführt sein kann, mit einer Fermentationsanlage kombiniert. Die Brauanlage hat einen Ausgang für die zweite Stofffraktion, der beispielsweise der Auslass eines Läuterbottichs für Treber oder der Auslass eines Trebersilos ist. Die Fermentationsanlage weist einen Eingang für die zweite Stofffraktion auf, der beispielsweise über eine Rohrleitung und eine Pumpe mit dem Ausgang der Brauanlage verbunden ist. Die Fermentationsanlage umfasst eine Einrichtung zum Inokulieren der zweiten Stofffraktion mit einem Pilzinokulat von Basidiomyceten und eine Einrichtung zum Fermentieren der inokulierten Stofffraktion in einer Submerskultur. Sie ist zumindest teilweise in Containern untergebracht.

Die Container können einfach und kostengünstig auf Schiene, Straße oder Wasser zum Einsatzort transportiert werden. Grundsätzlich wird nur eine Stellfläche für die Container benötigt, wofür vorhandene Flächen nutzbar sind. Die Fermentationsanlage kann ohne Eingriff in die Brauanlage und ohne Veränderung der Brauanlage errichtet werden. Hierbei können die Container baukastenartig zusammengestellt werden. Der bauliche Aufwand kann insgesamt äußerst klein gehalten werden. Die Fermentationsanlage kann schnell errichtet und in Betrieb genommen werden. Die zumindest teilweise Unterbringung der Fermentationsanlage in Containern ermöglicht eine hohe Flexibilität hinsichtlich der Anpassung der Fermentationsanlage an die jeweilige Brauanlage und an den jeweiligen Bedarf an proteinhaltigem Produkt.

Im Falle eines erhöhten Proteinbedarfes ist aufgrund der Containerbauweise eine schnelle und einfache Erweiterung möglich. Die Brauanlage kann unabhängig von der Fermentationsanlage ohne Beeinträchtigung weiterbetrieben werden. Die zweite Stofffraktion fällt ohnehin beim Betrieb der Brauanlage an und wird durch Verarbeitung zu proteinreichem Pilzmycel einer höherwertigen Nutzung als bislang zugeführt. Die Fermentationsanlage kann grundsätzlich unabhängig von der Brauanlage betrieben werden. Es ist möglich, nicht benötigte Mengen der zweiten Stofffraktion in herkömmlicher Weise zu verwenden.

Jeder Container ist ein austauschbares Modul und die Fermentationsanlage ist ganz oder teilweise aus austauschbaren Modulen in Form von Containern zusammengesetzt. Verschieden ausgebildeten Modulen kommen verschiedene Funktionen innerhalb der Fermentationsanlage zu. Dies ermöglicht es, die Fermentationsanlage schnell aufzubauen, an die jeweiligen Substrate, Arbeitsbedingungen und die gewünschten Ausbringungsmengen anzupassen und Defekte schnell durch Austausch von Containern zu beheben.

Gemäß einer Ausführungsart hat der Container mindestens eine definierte Schnittstelle zum Verbinden mit einem anderen Teil der Fermentationsanlage. Dies begünstigt, die Fermentationsanlage schnell und fehlerfrei aufzubauen, zu Erweitern und Defekte durch Austausch von Containern zu beheben.

Gemäß einer Ausführungsart ist die definierte Schnittstelle zum Verbinden mit einem anderen Teil der Fermentationsanlage eine Schnittstelle für Medien, elektrischen Strom und/oder Kommunikation. Gemäß einer Ausführungsart handelt es sich um eine Schnittstelle, die ausgebildet ist, eine Steckverbindung Schraubverbindung, Schnappverbindung oder Clamp-Verbindung mit einer Schnittstelle eines anderen Containers oder mit einer Leitung zum Verbinden mit einem weiteren Container herzustellen.

Gemäß einer Ausführungsart umfasst die Fermentationsanlage ein oder mehrere Container derselben Art, wobei die Anzahl Container gewählt ist, um den Durchsatz der Fermentationsanlage an die von der Brauanlage verfügbare Ausbringungsmenge der zweiten Stofffraktion anzupassen und/oder um die Ausbringungsmenge der Fermentationsanlage an eine vorgegebene Ausbringungsmenge des proteinhaltigen Produktes anzupassen. Durch Einsatz einer entsprechenden Anzahl der Container ist eine einfache Skalierung der Fermentationsanlage möglich, um diese an die verfügbare Ausbringungsmenge der zweiten Stofffraktion und/oder an die vorgegebene Ausbringungsmenge des proteinhaltigen Produktes anzupassen.

Gemäß einer weiteren Ausführungsart umfasst die Anlage zum Herstellen eines proteinhaltigen Produktes mindestens einen der nachfolgenden Container:
- Container zum Vorbereiten der zweiten Stofffraktion für die Fermentation (Vorbereitungscontainer),
- Container zum Herstellen eines Inokulats zum Animpfen einer Hauptfermentation (Vorfermentationscontainer),
- Container zum Durchführen der Hauptfermentation mittels des Inokulats und der zweiten Stofffraktion (Hauptfermentationscontainer),
- Container für die Entwässerung und/oder andere Behandlung des feuchten Pilzmycels aus der Hauptfermentation (Produktaufbereitungscontainer),
- Container zum Lagern des Endprodukts (Produktlagercontainer),
- Container zum Aufbereiten von Flüssigkeit aus der finalen Behandlung des feuchten Pilzmycels (Flüssigkeitsaufbereitungscontainer),
- Container für die Aufbereitung von Abwasser (Abwasseraufbereitungscontainer),
- Container für Wasser, Druckluft, Dampf und/oder andere Hilfsmedien für den Produktionsprozess (Hilfsmediencontainer),
- Container für die Aufbereitung von Wasser, Druckluft, Dampf und/oder anderer Hilfsmedien für die Herstellung des proteinhaltigen Produktes (Hilfsmedienaufbereitungscontainer),
- Container für die Erzeugung und/oder Speicherung von Elektrizität (Energiecontainer),
- Container mit einer für die Bereitstellung von Wärme und/oder Kälte (Temperierungscontainer),
- Container für eine CIP-Reinigung (Reinigungscontainer),
- Container für eine Verteilung von Medien und/oder Energie und/oder Kommunikationssignalen (Verteilcontainer),
- Container zum Zwischenlagern der zweiten Stofffraktion (Puffercontainer),
- Container für die Steuerung der Fermentationsanlage und/oder für die Kommunikation mit einer von der Fermentationsanlage räumlich getrennten externen Steuerungszentrale (Steuerungscontainer),
- Container für die Messung und Kontrolle von Eigenschaften der Ausgangsprodukte, Zwischenprodukte und/oder Endprodukte der Fermentationsanlage (Laborcontainer).

Nachfolgend wird vereinfachend die zweite Stofffraktion aus der Brauanlage vor und während der Verarbeitung in der Fermentationsanlage als "Treber" bezeichnet. Die betreffenden Ausführungen gelten entsprechend für andere zweite Stofffraktionen und für andere Brauereinebenströme, die zusätzlich zur weiteren Stofffraktion verarbeitet werden.

Der Vorbereitungscontainer ist für die Vorbereitung des Trebers für die Fermentation vorgesehen. Der Vorbereitungscontainer dient dazu, einen Zulauf für den Treber bereitzustellen, den Treber mit Flüssigkeiten zu mischen, für die Fermentation zu zerkleinern und/oder thermisch zu behandeln. Gemäß einer Ausführungsart weist der Vorbereitungscontainer einen Eingang für Treber und für Wasser und Flüssigkeiten aus dem Brauprozess, eine Einrichtung zum Zerkleinern von Treber und/oder einen Pufferbehälter für den zerkleinerten Treber und/oder eine Einrichtung zur thermischen Behandlung und/oder eine andere Einrichtung zum mikrobiologischen Stabilisieren und/oder zum technischen Sterilmachen von Treber auf.

Gemäß einer weiteren Ausführungsart ist die Einrichtung zur thermischen Behandlung eine Heizeinrichtung, die den Treber im Vorbereitungscontainer solchermaßen erhitzt, dass eine Sterilisation des Trebers bzw. der Treber-Flüssigkeitsmischung erfolgt.

Weitere Einrichtungen zum mikrobiologischen Stabilisieren und/oder technischen Sterilmachern sind in der nachfolgenden Beschreibung beschrieben. Gemäß einer Ausführungsart ist eine oder sind mehrere dieser Einrichtungen zum mikrobiologischen Stabilisieren im Vorbereitungscontainer angeordnet.

Durch die Einrichtung zum Zerkleinern von Treber wird eine größere Angriffsfläche für die Basidiomyceten geschaffen und die Geschwindigkeit der Biokonversion der eingesetzten Stofffraktion zu Proteine und/oder Aromastoffe enthaltendem Pilzmycel gesteigert.

Aus dem Vorbereitungscontainer wird der für die Fermentation vorbereitete Treber in den Vorfermentationscontainer transportiert. Der Vorfermentationscontainer dient dazu, ein Inokulat herzustellen, das zum Animpfen der zweiten Stofffraktion im Hauptfermenter verwendet wird. Der Vorfermentationscontainer umfasst einen, zwei oder mehr kleine Fermenter, in denen das Inokulat hergestellt wird.

Gemäß einer Ausführungsart umfasst der kleine Fermenter ein Rührwerk. Das Rührwerk dient dazu, dass Inokulat zu homogenisieren. Hierdurch werden einheitliche und reproduzierbare Bedingungen für die Fermentation gefördert, sodass optimale Bedingungen eingehalten werden können und die Geschwindigkeit der Biokonversion gesteigert werden kann.

Der Hauptfermentationscontainer umfasst einen oder mehrere Hauptfermenter, in dem die Hauptfermentation durchgeführt wird. Hierfür wird im Hauptfermenter der aufbereitete Treber aus dem Vorbereitungscontainer mittels des Inokulats aus dem Vorfermentationscontainer inokuliert und die Hauptfermentation durchgeführt. Über Leitungen kann der vorbereitete Treber aus dem Vorbereitungscontainer teils zum Herstellen des Inokulats zum Vorfermentationscontainer und teils zum Durchführen der Hauptfermentation zum Hauptfermentationscontainer transportiert werden.

Gemäß einer Ausführungsart umfasst der Hauptfermenter ein Rührwerk. Durch das Rührwerk wird der aufbereitete Treber, dass Inokulat und gegebenenfalls zusätzliches zugeführtes Wasser homogenisiert. Hierdurch werden einheitliche und reproduzierbare Bedingungen für die Fermentation gefördert, sodass optimale Bedingungen eingehalten werden können und die Geschwindigkeit der Biokonversion gesteigert werden kann.

Gemäß einer Ausführungsart umfasst der Hauptfermentationscontainer eine Einrichtung zum Zugeben von Wasser in den Hauptfermenter. Durch Zugabe von Wasser wird die für die Herstellung von Proteinen eingesetzte Stofffraktion verdünnt und gekühlt. Hierfür hat das Wasser vorzugsweise eine Temperatur unter 30 °C. Durch die Wasserzugabe kann zugleich ein optimaler Wassergehalt der Stofffraktion und eine optimale Temperatur für die Fermentation eingestellt werden.

Gemäß einer Ausführungsart wird das Inokulat gesondert von der zu fermentierenden Stofffraktion in den Hauptfermenter eingespeist und in dem Hauptfermenter mit der zu fermentierenden Stofffraktion gemischt.

Gemäß einer Ausführungsart wird die zu fermentierende Stofffraktion vor dem Einspeisen in den Hauptfermenter mit dem Inokulat gemischt. Das Mischen mit dem Inokulat kann vor, beim oder nach dem Mischen der zu fermentierenden Stofffraktion mit Wasser erfolgen.

Die inokulierte Stofffraktion wird in einer Submerskultur fermentiert. Hierbei wird die Fermentation innerhalb der Dispersion aus der eingesetzten Stofffraktion und dem Inokulat in der wässrigen Phase durchgeführt. Die Submersfermentation ist vorteilhaft, weil mit flüssigen bzw. pumpfähigen Medien in Misch-, Reaktions- und Lagerbehältern und diese verbindenden Rohrleitungen und Pumpen und/oder sonstigen Fördereinrichtungen gearbeitet werden kann.

Gemäß einer Ausführungsart ist der Vorfermentationscontainer und/oder der Hauptfermentationscontainer ein standardisierter Tankcontainer oder auf Basis eines standardisierten Tankcontainers ausgebildet. Ein auf Basis eines standardisierten Tankcontainers ausgebildeter Vorfermentationscontainer und/oder Hauptfermentationscontainer kann insbesondere mit einem Rührwerk und/oder mit einer Einrichtung zur Temperierung des Mediums im Tank des Tankcontainers auf eine gewünschte Temperatur versehen sein, die vorteilhaft für die Durchführung der Fermentation ist. Bei der Einrichtung zur Temperierung kann es sich um eine Einrichtung zum Kühlen und/oder zum Erwärmen des Mediums im Tanks handeln.

Gemäß einer Ausführungsart ist der Tankcontainer vertikal aufgestellt, sodass seine Hauptausdehnungsrichtungen vertikal ausgerichtet ist. Infolgedessen steht die kleinstmögliche Fläche des Containers auf dem Boden. Hierdurch wird eine platzsparende Anordnung des Tankcontainers erreicht.

Der Produktaufbereitungscontainer dient der Entwässerung und/oder einer anderen Behandlung des feuchten Pilzmycels aus der Hauptfermentation. Hierfür ist der Produktaufbereitungscontainer mit einer Einrichtung zur Entwässerung und/oder mit einer anderen Einrichtung für ein *downstream processing* versehen. Über eine Leitung kann das Pilzmycel aus der Hauptfermentation im Hauptfermentationscontainer zum *downstream processing* im Produktaufbereitungscontainer transportiert werden.

Der Produktlagercontainer dient zum Lagern des Endproduktes. Gemäß einer Ausführungsart handelt es sich hierbei um einen einfachen Standardcontainer. Gemäß einer weiteren Ausführungsart ist der Produktlagercontainer ein Standardcontainer mit einer Einrichtung zum Temperieren der darin eingelagerten Produkte. Gemäß einer weiteren Ausführungsart ist der Produktlagercontainer ein Kühlcontainer oder ein Gefriercontainer. Über Leitung und/oder Transporteinrichtung kann das aufbereitete Produkt aus dem Produktaufbereitungscontainer in den Produktlagercontainer überführt werden.

Der Flüssigkeitsaufbereitungscontainer dient dazu, die Flüssigkeit aus der Produktbehandlung im Produktaufbereitungscontainer aufzubereiten. Gemäß einer Ausführungsart werden hierzu Einrichtungen zum Filtern, zum Zentrifugieren, zur Membrantrennung, zum Extrahieren, zum Absorbieren, zum Adsorbieren oder andere mechanische, thermische, biologische, chemische und/oder physikalische Trenneinrichtungen verwendet. Der Flüssigkeitsaufbereitungscontainer ist über eine weitere Leitung mit dem Produktaufbereitungscontainer verbunden.

Der Abwasseraufbereitungscontainer dient der Aufbereitung von Abwasser aus dem Flüssigkeitsaufbereitungscontainer. Gemäß einer Ausführungsart weist er eine mechanische, thermische, biologische, chemische und/oder physikalische Einrichtung zur Abwasseraufbereitung auf.

Die Aufbereitung der Flüssigkeit aus dem Produktaufbereitungscontainer und die Aufbereitung des Abwassers kann auch in einem einzigen Container zusammengefasst werden (Flüssigkeitsaufbereitungs- und Abwassercontainer).

Der Hilfsmediencontainer dient zur Bereitstellung von Wasser, Dampf, Druckluft und/oder anderer Medien für den Produktionsprozess. Gemäß einer Ausführungsart enthält er mindestens eine Einrichtung zur Bereitstellung eines dieser Medien. Das Wasser wird benötigt, um den Flüssigkeitsanteil des Substrats für die Submersfermentation einzustellen. Heißdampf wird insbesondere für die Reinigung und Sterilisation von Komponenten und Leitungen der Anlage benötigt. Druckluft wird insbesondere für den Betrieb von Ventilen sowie die Belüftung der Fermenter benötigt. Der Mediencontainer ist über Leitungen mit einem oder mehreren weiteren Containern der Anlage verbunden.

Der Hilfsmedienaufbereitungscontainer dient der Sterilisation der Medien Wasser, Wasserdampf und Druckluft, um diese für die Fermentation einzusetzen. Gemäß einer Ausführungsart enthält hierzu der Container eine Wassersteril-Filtrationsanlage und/oder einer Einrichtung für die Dampffiltration und/oder eine Einrichtung für die Druckluftfiltration.

Der Energiecontainer dient dazu, Elektrizität für die verschiedenen elektrischen Verbraucher der Fermentationsanlage zu erzeugen und/oder zu speichern und für die einzelnen Verbraucher bereitzustellen. Gemäß einer Ausführungsart enthält der Energiecontainer ein Stromaggregat, einen Akkumulator, eine Batterie und/oder eine Brennstoffzelle. Der Energiecontainer kann dafür ausgelegt sein, die Fermentationsanlage permanent mit Elektrizität zu versorgen. Er kann aber auch dafür ausgelegt sein, bei Stromausfällen eine temporäre Versorgung der Fermentationsanlage mit Elektrizität sicherzustellen.

Der Temperierungscontainer dient dazu, Wärme und/oder Kälte zur Temperierung einer oder mehrerer Komponenten der Fermentationsanlage zur Verfügung zu stellen. Insbesondere dient der Temperierungscontainer zum Bereitstellen von Wärme und/oder Kälte zur Temperierung eines Vorfermenter und/oder eines Hauptfermenters. Gemäß einer weiteren Ausführungsart enthält der Temperierungscontainer eine Wärme- und/oder eine Kälteanlage. Gemäß einer weiteren Ausführungsart enthält der Temperierungscontainer eine Wärmepumpe, wobei mittels der Wärmepumpe zugleich Teile der Fermentationsanlage gekühlt und andere Teile erwärmt werden können. Der Temperierungscontainer kann über Leitungen, die mit Wärmeträgerflüssigkeit gefüllt sind, mit einem oder mehreren weiteren Containern verbunden sein.

Der Reinigungscontainer dient dazu, Medien für eine CIP-Reinigung zum Reinigen von Anlagenkomponenten und Leitungen zur Verfügung zu stellen. Bei den Medien kann es sich um Säure, Lauge und/oder Wasser handeln. Gemäß einer Ausführungsart sind die Medien in Kanistern oder anderen Behältern im Reinigungscontainer bevorratet. Gemäß einer Ausführungsart umfasst der Reinigungscontainer eine Einrichtung zum Mischen verschiedener Medien für die CIP-Reinigung. Gemäß einer Ausführungsart umfasst der Reinigungscontainer eine Pumpe oder eine andere Fördereinrichtung zum Transportieren der Stoffzusammensetzung für die CIP-Reinigung zum Reinigungsort. Der Reinigungscontainer ist über eine oder mehrere Leitungen mit einer oder mehreren Komponenten oder Leitungen der Fermentationsanlage verbunden.

Mit *"cleaning in place"* (CIP) ist ein Verfahren zur Reinigung verfahrenstechnischer Anlagen (insbesondere z.B. biotechnische oder lebensmitteltechnische Anlagen) bezeichnet. Bei diesem Reinigungsverfahren wird die Anlage ohne wesentliche Demontage auf den Flächen gereinigt, die mit dem Produkt in Kontakt kommen. Durch exakte Festlegung von Reinigungsmitteln, Drücken, Temperaturen und Einwirkungszeiten wird ein reproduzierbarer Prozess festgelegt.

Der Verteilcontainer dient dazu, Medien und/oder Energie und/oder Kommunikationssignale verschiedener Komponenten der Anlage zu verteilen. Gemäß einer Ausführungsart weist der Verteilcontainer verschiedene Schnittstellen für den Anschluss von Leitungen für (flüssige) Medien, für Energie (z.B. Stromkabel) und/oder für Daten (z.B. Datenkabel oder Lichtwellenleiter) auf. Hierbei kann es Schnittstellen für die Einspeisung von Medien und/oder Energie und/oder Daten und Schnittstellen für die Ausgabe von Medien und/oder Energie und/oder Daten handeln. Die Schnittstellen für die Einspeisung und die Ausgabe sind innerhalb des Containers in einer definierten Weise miteinander verbunden.

Der Puffercontainer dient dazu, den Treber aus der Brauanlage zwischenzuspeichern, bevor dieser in der Fermentationsanlage weiterverarbeitet wird. Gemäß einer Ausführungsart ist der Puffercontainer ein Tankcontainer. Gemäß einer Ausführungsart weist der Puffercontainer eine Einrichtung zur Temperierung des Trebers im Puffercontainer auf. Gemäß einer Ausführungsart weist der Puffercontainer Mittel zur Sterilisation des Trebers auf. Die Mittel zur Sterilisation des Trebers können beispielsweise Heizeinrichtungen (z.B. zur Ultrahocherhitzung bzw. Dampfdruck-Sterilisation) sein, die den Treber im Puffercontainer auf eine Temperatur bringen, bei der sich Keime im Treber nicht anreichern oder diese unschädlich gemacht werden. Gemäß einer Ausführungsart ist der Puffercontainer ein Tankcontainer, der mit einer Heizeinrichtung und/oder einer Einrichtung zum Rühren ausgestattet ist. Gemäß einer Ausführungsart ist der Vorbereitungscontainer zugleich ein Puffercontainer.

Der Steuerungscontainer dient dazu, die Fermentationsanlage zu steuern und/oder mit einer von der Fermentationsanlage räumlich getrennten externen Steuerungszentrale zu kommunizieren. Gemäß einer Ausführungsart enthält der Steuerungscontainer eine elektronische Datenverarbeitungsanlage, die ausgebildet ist, die Fermentationsanlage zu steuern und/oder mit einer von der Fermentationsanlage räumlich getrennten externen Steuerungszentrale zu kommunizieren. Gemäß einer Ausführungsart umfasst der Steuerungscontainer mindestens eine Schnittstelle für die Daten und/oder mindestens eine Schnittstelle für die Energieversorgung. Gemäß einer Ausführungsart ist die elektronische Datenverarbeitungsanlage ausgebildet, einen automatischen oder im Wesentlichen automatischen Ablauf der Vorgänge in der Fermentationsanlage zu steuern. Hierdurch wird eine schnelle Inbetriebnahme und ein dauerhafter Betrieb der Fermentationsanlage ohne zusätzlichen Aufwand für den Betrieb der Brauanlage ermöglicht.

Gemäß einer Ausführungsart ist die elektronische Datenverarbeitungsanlage ausgebildet, an die externe Steuerungszentrale in Echtzeit Daten über den Zustand der Medien und Produkte in der Fermentationsanlage und/oder von einer oder mehrerer Komponenten der Fermentationsanlage zu liefern. Gemäß einer Ausführungsart weist mindestens ein Container Sensoren zum Erfassen des Zustands der Medien und Produkte in der Fermentationsanlage und/oder von Komponenten der Fermentationsanlage auf.

Gemäß einer Ausführungsart ist die externe Steuerungszentrale ausgebildet, auf die Steuerung der Fermentationsanlage zuzugreifen, um die Arbeitsweise der Fermentationsanlage und/oder den Zustand der Medien in der Fermentationsanlage zu überwachen, zu ändern, die Fermentationsanlage fernzusteuern, eine Ferndiagnose durchzuführen und/oder eine Fernbehandlung von Fehlern durchzuführen.

Gemäß einer Ausführungsart ist die Steuerungszentrale ausgebildet, mithilfe der von dem Steuerungscontainer bereitgestellten Daten Medien, Produkte, Komponenten, Prozesse und/oder die gesamte Produktion in der Fermentationsanlage zu simulieren. Hierdurch werden virtuelle Ebenbilder der Medien, Produkte, Komponenten, Prozesse und/oder der gesamten Fermentationsanlage in der externen Steuerungszentrale erzeugt, die auch als "digitale Zwillinge" bezeichnet werden. Ein digitaler Zwilling des Fermentationsprozesses kann insbesondere in Echtzeit den Zustand der Basidiomyceten-Kulturen simulieren. Dies ermöglicht eine präzise Vorhersage von Wachstumsraten, Ertrag und optimalen Erntezeitpunkten. Hierdurch können Fermentationsparameter in Echtzeit angepasst werden, um den Prozess zu optimieren und den Ertrag zu maximieren.

Gemäß einer Ausführungsart sind die Sensoren ausgebildet, kontinuierlich und in Echtzeit alle physikalischen und biochemischen Parameter zu erfassen. Die Sensoren sind entlang des Produktionsprozesses und in den Versorgungssystemen installiert und liefern über kompatible Schnittstellen die Rohdaten an den Steuerungscontainer/die elektronische Datenverarbeitungsanlage. Gemäß einer Ausführungsart werden diese für die Erzeugung eines virtuellen Ebenbildes verwendet. Gemäß einer Ausführungsart werden die erfassten Daten drahtlos, über Kabel oder über Satellit an eine externe Steuerungszentrale übertragen. Dort können Sie einer zentralen Datenplattform zugeführt werden. Gemäß einer Ausführungsart erfolgt die Datenübertragung über sichere Netzwerkprotokolle, um die Integrität und Sicherheit der Daten zu gewährleisten.

Der Laborcontainer dient dazu, die Eigenschaften der Ausgangsprodukte, insbesondere des Trebers, der Basidiomyceten und der Hilfsmedien, der Zwischenprodukte, insbesondere des aufbereiteten Trebers des Inokulats und der Endprodukte, insbesondere des Pilzmycels und des Abwassers, zu messen und zu kontrollieren. Für die Messung können in den verschiedenen Anlagenkomponenten Sensoren angeordnet sein und/oder Meßapparaturen im Laborcontainer verwendet werden, in denen Proben analysiert werden. Die Proben können den Meßapparaturen über Probenleitungen zugeführt werden und/oder an den jeweiligen Anlagenkomponenten abgenommen und zu den Meßapparaturen im Laborcontainer transportiert werden. Die Ergebnisse der Messungen können insbesondere für die Steuerung des Prozesses, die Qualitätskontrolle und den Nachweis einzuhaltender Spezifikationen verwendet werden.

Gemäß einer Ausführungsart sind mehrere Container nebeneinander und/oder übereinander angeordnet. Hierdurch wird eine platzsparende Anordnung der Fermentationsanlage ermöglicht und ein Skalieren, um die gewünschten Ausbringungsmengen zu erreichen.

Gemäß einer Ausführungsart sind mehrere Container um einen oder mehrere Mediencontainer herum angeordnet. Hierdurch wird eine besonders effiziente Verteilung von Flüssigkeiten, Energie und/oder Daten ermöglicht.

Gemäß einer Ausführungsart sind mehrere Container parallel angeordnet. Hierdurch wird eine besonders platzsparende Unterbringung ermöglicht.

Gemäß einer Ausführungsart ist ein oder sind mehrere Container horizontal und/oder ist ein oder sind mehrere Container vertikal ausgerichtet. Je nach Funktion des Containers kann eine horizontale oder vertikale Ausrichtung von Vorteil sein.

Gemäß einer Ausführungsart sind mehrere Container in Gruppen nebeneinander angeordnet. Dies ist vorteilhaft für die Verbindung verschiedener Container über Schnittstellen und/oder Leitungen. Ferner kann die Anordnung der Container in Gruppen, in denen Container mit derselben Funktion zusammengestellt sind, den Aufbau der Fermentationsanlage, die Überwachung, Wartung, Instandhaltung, das Einhalten bestimmter Betriebszustände (z.B. der Betriebstemperatur) erleichtern und die Betriebssicherheit erhöhen.

Gemäß einer Ausführungsart sind flüssige Medien führende Container in einer tieferen Ebene und/oder der Kommunikation, Datenverarbeitung, Steuerung, Energieversorgung und/oder Temperierung dienende Container in einer höheren Ebene angeordnet.

Gemäß einer Ausführungsart ist mindestens ein Container ein standardisierter 20 Fuß-Container und/oder ist mindestens ein Container ein standardisierter 40 Fuß-Container und/oder ist mindestens ein Container ein standardisierter 45 Fuß-Container.

Standardisierte Container (ISO-Container) sind genormte Großraumbehälter aus Stahl, die insbesondere für den Transport von Fracht auf dem Wasser, auf der Schiene und auf der Straße verwendet werden. In einschlägigen Normen sind insbesondere Abmessungen, Halterungen und Stapelbarkeit festgelegt auf ISO-Norm 668. Die am weitesten verbreiteten ISO-Container haben eine Breite von 8 Fuß (2,4384 m), eine Höhe von 8 Fuß 6 Zoll (2,591 m) und eine Länge von entweder 20 Fuß (6,058 m) oder 40 Fuß (12,192 m). ISO-Container können insbesondere als Standardcontainer, Kühlcontainer oder Tankcontainer ausgeführt sein.

Im Rahmen der Erfindung können auch andere standardisierte Container eingesetzt werden. Vorzugsweise werden Container eingesetzt, die für den Lkw-Transport geeignet sind.

Die Brauanlage ist eine ortsfeste Brauanlage. Die Erfindung kann insbesondere durch Kombination bestehender stationärer Brauanlagen mit der Fermentationsanlage verwirklicht werden.

Gemäß einer Ausführungsart ist die Fermentationsanlage zumindest teilweise auf Lkw-Plätzen für den Abtransport von Treber oder eines anderen Brauereinebenstromes neben der Brauanlage platziert. Brauereien haben in der Regel neben dem Trebersilo Lkw-Plätze für den Abtransport von Treber, die für die Aufstellung der Fermentationsanlage nutzbar sind.

Gemäß einer Ausführungsart ist der Ausgang für die zweite Stofffraktion der Brauanlage über eine Rohrleitung und/oder eine Pumpe und/oder einen Pufferbehälter mit dem Eingang für die zweite Stofffraktion der Fermentationsanlage verbunden. Gemäß einer Ausführungsart erfolgt die Treberförderung vom Ausgang der Brauanlage zum Eingang der Fermentationsanlage mittels Druckluft. Über den Pufferbehälter können Schwankungen bei der Ausbringungsmenge der zweiten Stofffraktion abgepuffert werden und/oder eine Sterilisation der zweiten Stofffraktion über eine hinreichende Zeitspanne durchgeführt werden, um die zweite Stoffaktion für die weitere Verarbeitung keimfrei zu machen. Gemäß einer weiteren Ausführungsart ist der Pufferbehälter ein Tankcontainer oder ein Silo zum Lagern von Treber oder eines anderen Brauereinebenstromes. Hierfür kann ein ohnehin in einer Brauerei vorhandenes Silo für einen Brauereinebenstrom verwendet werden.

Gemäß einer Ausführungsart werden der Brauprozess oder ein anderes Verfahren zum Herstellen von Getränken in der Brauanlage und die Herstellung von Proteinen in der Fermentationsanlage Inline durchgeführt. Hierbei sind die Brauanlage und die Fermentationsanlage zu einer zusammenhängenden Anlage fortlaufend miteinander verbunden. Anlagentechnisch wird dies insbesondere durch physische Verbindung der Anlagenteile für die Durchführung des Brauprozesses oder anderen Verfahrens zum Herstellen von Getränken mit den Anlagenteilen für die Herstellung von Proteinen über Leitungen und/oder kontinuierlich oder intermittierend arbeitende Fördersysteme zu einer Gesamtanlage verwirklicht.

Gemäß einer Ausführungsart umfasst die Einrichtung zum Transportieren der zweiten Stofffraktion vom Ausgang der Brauanlage zum Eingang der Fermentationsanlage mindestens ein Transportfahrzeug. Gemäß einer weiteren Ausführungsart ist das Transportfahrzeug ein Lkw, eine Eisenbahn und/oder ein Schiff.

Gemäß dieser Ausführungsart wird die Stofffraktion mit hohem Feststoffgehalt nach dem Abläutern der flüssigen Bierwürze mittels Lkw, Eisenbahn, Schiff oder eines anderen Transportfahrzeuges zur Fermentation an einen mehr oder weniger entfernten Ort transportiert. Hierbei kann es sich um einen innerbetrieblichen oder um einen außerbetrieblichen Transport handeln.

Gemäß einer weiteren Ausführungsart wird die Stofffraktion mit hohem Feststoffgehalt mittels Lkw mit (Sattel-) Auflieger transportiert. Gemäß einer weiteren Ausführungsart wird die Stofffraktion mit hohem Feststoffgehalt mittels Tankwagen transportiert. Gemäß einer weiteren Ausführungsart wird das Transportfahrzeug direkt mit der aus dem Läuterbottich entnommenen Stofffraktion mit hohem Feststoffgehalt befüllt oder wird diese Stofffraktion in einem Silo zwischengespeichert und das Transportfahrzeug nach dem Zwischenspeichern mit der Stofffraktion befüllt.

Gemäß einer Ausführungsart wird die für die Herstellung von Proteinen eingesetzte Stofffraktion mit Wasser verdünnt. Durch Verdünnen mit Wasser kann die Stofffraktion fließ- und pumpfähig und in einen für eine Fermentation in einer Submerskultur geeigneten Zustand gebracht werden. Dies gilt insbesondere für die Vorbereitung der Stofffraktion mit hohem Feststoffgehalt aus der Maische und/oder für die Vorbereitung von vermälztem und/oder unvermälztem Getreide aus dem Mälzereiprozess für die Fermentation.

Gemäß einer Ausführungsart wird die für die Herstellung von Proteinen eingesetzte Stofffraktion frisch verarbeitet und/oder mikrobiologisch stabilisiert und/oder technisch steril gemacht. Die Stofffraktion gilt dann als frisch verarbeitet und/oder mikrobiologisch stabilisiert und/oder technisch steril, wenn sich nach dem Abtrennen der Stofffraktion von der Maische keine pathogenen Mikroorganismen in der Stofffraktion anreichern. Der in dem Läuterbottich anfallende Biertreber kann als technisch steril bezeichnet werden. Gemäß einer Ausführungsart der Erfindung ist der Ausgang der Brauanlage für die zweite Stofffraktion der Auslass des Läuterbottichs oder eines anderen Läutergerätes für Treber. Gemäß einer Ausführungsart ist der Treber aus dem Läutergerät mikrobiologisch stabilisiert. Durch die mikrobiologische Stabilisierung können sich Mikroorganismen, die im Hinblick auf eine Temperatur von maximal 78° beim Maischen nicht völlig ausgeschlossen werden können, im weiteren Verfahren nicht anreichern und das Produkt verunreinigen.

Gemäß einer Ausführungsart der Erfindung ist der Ausgang der Brauanlage für die zweite Stofffraktion der Auslass eines Trebersilos. Der beim herkömmlichen Bierbrauen anfallende Treber ist infolge der Lagerung in großen Silos reich an Mikroorganismen und eine Anreicherung von Pathogenen ist nicht auszuschließen, sodass der Treber grundsätzlich nicht den hygienischen Anforderungen für eine Verarbeitung zu einem Lebensmittel genügt. Gemäß einer Ausführungsart wird der Treber aus dem Trebersilo mikrobiologisch stabilisiert.

Gemäß einer Ausführungsart wird die für die Herstellung von Proteinen eingesetzte zweite Stofffraktion durch mindestens eine der folgenden Maßnahmen frisch verarbeitet und/oder mikrobiologisch stabilisiert und/oder technisch steril gemacht:
- Durch kurze Verweilzeiten vom Anfallen bis zum Fermentieren der Stofffraktion (vorzugsweise von höchstens 24 Stunden, weiterhin vorzugsweise höchstens 12 Stunden, weiterhin vorzugsweise höchstens 4 Stunden),
- durch eine Nacherhitzung auf mindestens 80 °C, vorzugsweise auf mindestens 90 °C, vorzugsweise durch Autoklavieren,
- durch Herunterkühlen auf eine Temperatur unter 30°C,
- durch Zusetzen von Säure, vorzugsweise von Milchsäure, vorzugsweise von Milchsäure aus dem Brauprozess oder anderen Verfahren zum Herstellen von Lebensmitteln,
- durch Einsatz von Basidiomyceten, die antimikrobielle Verbindungen bilden,
- durch regelmäßiges, vorzugsweise mindestens tägliches, Entleeren, Reinigen und Sterilisieren der Anlagenteile einer Produktionsanlage zur Durchführung des Verfahrens bzw. eines Transportfahrzeuges zum Transportieren der Stofffraktion (z. B. Silos, Leitungen, Förderschnecken, Tanks), durch die die Stofffraktion hindurchgeführt und/oder in denen sie gelagert wird.

Gemäß einer weiteren Ausführungsart erfolgt eine Nacherhitzung der für die Herstellung von Proteinen eingesetzten Stofffraktion auf eine Temperatur im Bereich von 90 °C bis 130 °C.

Eine oder mehrere der vorgenannten Maßnahmen zum mikrobiologischen Stabilisieren und/oder technischen Sterilmachen der für die Herstellung von Proteinen eingesetzten zweiten Stofffraktion werden zumindest in einem Ausmaß durchgeführt, das sie eine mikrobiologische Stabilisierung bis zur Biokonversion des Substrats zu proteinreichem Pilzmycel sicherstellt. Untersuchungen mit Pilzmycelien haben gezeigt, dass diese mikrobiologisch vergleichsweise stabil sind.

Gemäß einer Ausführungsart ist die Einrichtung zum Transportieren der zweiten Stofffraktion vom Ausgang der Brauanlage zum Eingang der Fermentationsanlage und/oder ist die Fermentationsanlage ausgebildet, eine oder mehrere der vorgenannten Maßnahmen zum mikrobiologischen Stabilisieren und/oder technischen Sterilmachen der zweiten Stofffraktion durchzuführen. Gemäß einer Ausführungsart ist die Einrichtung zum Transportieren und/oder die Fermentationsanlage mit einer Einrichtung zum Nacherhitzen, einer Einrichtung zum Zusetzen von Säure, einer Einrichtung zum Zusetzen von Basidiomyceten und/oder einer Einrichtung zum Reinigen und Sterilisieren ausgestattet. Gemäß einer Ausführungsart ist die Einrichtung zum mikrobiologischen Stabilisieren und/oder technischen Sterilmachen in einem oder mehreren Containern der Fermentationsanlage angeordnet.

Kurze Verweilzeiten können insbesondere dadurch erreicht werden, dass der Brauprozess oder ein anderes Verfahren zum Herstellen von Getränken und die Herstellung von Proteinen inline durchgeführt werden. Der Treber ist durch die direkte (inline) Verarbeitung ärmer an Mikroorganismen als der Treber, der erst noch in einem Silo gelagert wird und enthält keine pathogenen Keime. Falls die Stofffraktion mit hohem Feststoffgehalt nach der Entnahme aus dem Läuterbottich mittels eines Transportfahrzeuges zum Ort der Fermentation transportiert wird, kann die Verweilzeit insbesondere durch direktes Einfüllen der Stofffraktion in das Transportfahrzeug oder Einfüllen nach kurzer Zwischenlagerung in das Transportfahrzeug und/oder kurze zeitliche Taktung der Transporte mittels des Transportfahrzeuges kurz gehalten werden. Eine mikrobiologische Stabilisierung durch Nacherhitzung und/oder durch Herunterkühlen der Stofffraktion mit hohem Feststoffgehalt kann insbesondere während einer Zwischenlagerung in einem Silo und/oder in einem Tank eines Transportfahrzeuges erfolgen. Hierfür können Anlagenteile einer Produktionsanlage bzw. eines Transportfahrzeuges entsprechend beheizt und/oder gekühlt werden und/oder kann die Stofffraktion mit erhitztem und/oder gekühltem Wasser temperiert und verdünnt werden. Die hygienischen Anforderungen an die mikrobiologische Stabilisierung der Stofffraktion mit hohem Feststoffanteil ergeben sich aus dem Lebensmittel- und Futtermittelgesetzbuch (LFGB) in der Fassung der Bekanntmachung vom 15. September 2021. Der Transport der Stofffraktion durch Transportfahrzeuge entsprechend den Hygiene-Anforderungen kann von einer zertifizierten Qualitätssicherung betreut werden.

Nachfolgend sind Ausführungsarten angegeben, die durch entsprechende Ausgestaltung der Anlagenkomponenten in den Containern, Einspeisung entsprechender Ausgangsmaterialien in die Fermentationsanlage und/oder Weiterverarbeitung des in der Fermentationsanlage erzeugten Produktes verwirklicht werden können.

Gemäß einer Ausführungsart wird während der Fermentation die Fermentationsbrühe gerührt und/oder umgepumpt. Durch Rühren und/oder Umpumpen wird die aus der inokulierten Stofffraktion und die wässrige Phase gebildete Fermentationsbrühe homogenisiert und die Einhaltung optimaler Bedingungen für die Fermentation gefördert.

Gemäß einer Ausführungsart wird die Fermentation bei einer Temperatur zwischen 18°C und 30°C, vorzugsweise zwischen 20°C und 26°C, durchgeführt. Dieser Temperaturbereich ist meistens für die Fermentation mittels Basidiomyceten optimal.

Gemäß einer Ausführungsart wird die Substratzusammensetzung bei der Fermentation so eingestellt, dass der C-Gehalt 4 bis 20 g/l, der N-Gehalt 0,5 bis 5 g/l und/oder das C/N-Verhältnis ca. 10 bis 40 beträgt. Durch Einhaltung dieser Parameter wird der Nährstoffbedarf der Basidiomyceten in der Regel gedeckt.

Gemäß einer Ausführungsart wird das Proteine enthaltende Pilzmycel aus der bei der Fermentation gebildeten Pilzmaische abgetrennt. Hierdurch wird das Produkt entwässert und die Proteine und/oder Aromastoffe angereichert.

Gemäß einer Ausführungsart wird das Pilzmycel durch Filtrierung, Dekantieren, Zentrifugieren oder Abscheiden von der Pilzmaische abgetrennt.

Gemäß einer Ausführungsart wird das Proteine enthaltende Pilzmycel als Endprodukt verwendet, beispielsweise als Lebensmittel oder Nutraceutical, d.h. als Lebensmittel mit pharmazeutischem Zusatznutzen.

Gemäß einer Ausführungsart werden die Proteine und/oder Aromastoffe zumindest teilweise vom Pilzmycel abgetrennt, vorzugsweise durch Extraktion. Die abgetrennten Stoffe werden beispielsweise direkt als Endprodukt verwendet oder mit anderen Stoffen zu Endprodukten verarbeitet.

Gemäß einer Ausführungsart werden beim Brauprozess und/oder beim Herstellungsprozess für Pilzmycel anfallende Reststoffe, gegebenenfalls nach einer Aufbereitung, einem vorangehenden Verfahrensschritt zugeführt. Die Reststoffe können insbesondere als zu fermentierende Stofffraktion eingesetzt werden oder als Düngemittel beim Anbau des Getreides. Die Reststoffe können auch in einer Biogasanlage eingesetzt werden. Der Gärrest der Biogasanlage kann als Düngemittel für den Anbau von Getreide verwendet werden.

Gemäß einer Ausführungsart wird das Pilzmycel zu einem Lebensmittel, Ergänzungsmittel, Nutraceutical, Genussmittel, Futtermittel oder Arzneimittel verarbeitet.

Gemäß einer Ausführungsart werden die Proteine und/oder Aromastoffe aus dem Pilzmycel extrahiert und zu einem Lebensmittel, Ergänzungsmittel, Nutraceutical, Genussmittel oder Arzneimittel verarbeitet.

Gemäß einer Ausführungsart ist der Ständerpilz ausgewählt aus der nachfolgenden Gruppe von Pilzen: *Pleurotus eryngii, Pholiota nameko, Cyclocybe aegerita.*

Mit diesen Basidiomyceten können Proteinmischungen mit hoher biologischer Wertigkeit, attraktiven Aromaprofilen und geringen Glutenanteilen erreicht werden.

Gemäß einer Ausführungsart weist die Mischung von Proteinen eine biologische Wertigkeit von mindestens 94, vorzugsweise mindestens 97 auf.

Gemäß einer Ausführungsart umfasst der Container im oberen Bereich Leitungen für Medien und/oder Energie und/oder Kommunikation und/oder in der Außenwand eine oder mehrere Schnittstellen zum Verbinden mit weiteren Containern und/oder im unteren Bereich Aggregate für die Produktion, Lagerbehälter, Steuerungseinrichtungen und/oder elektronische Datenverarbeitungsanlagen.

Mithilfe von ausgewählten Basidiomyceten wurden proteinhaltige Produkte aus Treber hergestellt. Hierfür wurden die in der nachfolgenden Tab. 1 angeführten Basidiomyceten verwendet:

**Tabelle 1: Verwendete Basidiomyceten.**

| **Stamm** | **Trivialname** | **Abkürzung** | **Interne Stamm-Nr.** | **Herkunft** | **Stamm-Nr.** |
|---|---|---|---|---|---|
| *Pleurotus eryngii* | Brauner Kräuterseitling | PER | 100 | DSMZ | 8264 |
| *Pholiota nameko* | Japanisches Stockschwämmchen | PNA | 113 | DSMZ | 6908 |
| *Cyclocybe aegerita* | Südlicher Ackerling | AAE | 166 | Fa. Sylvan, Horst, NL | 4022 |

Einzelheiten über die Durchführung der Untersuchung und ihre Ergebnisse sind in der internationalen Patentanmeldung PCT/EP2023/059727 beschrieben. In dieser Hinsicht wird Bezug genommen auf die internationale Patentanmeldung Nr. PCT/EP2023/059727, deren Inhalt hiermit in diese Anmeldung aufgenommen wird. Dies gilt insbesondere für Seite 34, Abs. 3 bis Seite 53 der internationalen Patentanmeldung.

Nachfolgend wird die Erfindung anhand der anliegenden Zeichnungen von Ausführungsbeispielen näher erläutert. In den Zeichnungen zeigen:
- Fig. 1: eine Anlage umfassend ein Brauanlage und eine Fermentationsanlage zum Herstellen eines proteinhaltigen Produktes in einem vereinfachten Prozessschaubild;
- Fig. 2: eine Fermentationsanlage zum Herstellen eines proteinhaltigen Produktes mit den Anlagenkomponenten in verschiedenen Containern in einem grob schematischen Vertikalschnitt;
- Fig. 3: eine Fermentationsanlage zum Herstellen eines proteinhaltigen Produktes mit vier Hauptfermentern in einer Draufsicht;
- Fig. 4: eine Fermentationsanlage mit acht Hauptfermentern in einer grob schematischen Draufsicht;
- Fig. 5: dieselbe Fermentationsanlage in einer Perspektivansicht schräg von oben.

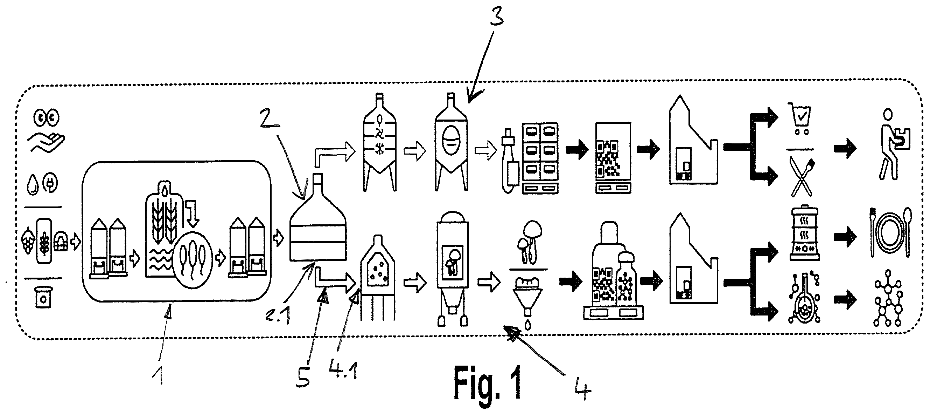

Gemäß Fig. 1 beginnen das Bierbrauen und die Proteingewinnung mit dem Keimen von Gerste oder einem anderen Getreide und ihrer Umwandlung in enzymhaltiges Malz.

In einer Einrichtung zum Herstellen einer Maische 1 wird das Malz zerkleinert und mit warmem Wasser vermischt. Diese Maische wird in einen Maischbottich eingefüllt. Hier entstehen innerhalb weniger (1 bis 2) Stunden aus der in den Malzkörnern gespeicherten Getreidestärke durch die Wirkung von Stärke abbauenden Enzymen (Amylasen), Malzzucker (Maltose), Traubenzucker (Glucose) und andere Zucker. Zellwandabbauende Enzyme (Cellulasen) bauen die äußeren Hüllen der Gerstenkörner ab, damit die Amylase die Stärke im Korninneren angreifen kann.

Hinter dem Maischbottich werden im Läuterbottich bzw. Läutergerät (Einrichtung zum Fraktionieren der Maische) 2 Bierwürze und Treber voneinander getrennt und gabelt sich der Prozess in zwei Stränge auf.

Anschließend werden in einer Einrichtung zum Herstellen von Bier 3 der flüssige süße Anteil der Maische (Bierwürze) in eine Würzpfanne eingebracht (oberer Strang). Dabei wird Hopfen zugesetzt. Dieser verleiht dem Bier den würzig-bitteren Geschmack. Die so entstehende Würze füllt der Brauer in einen Gärbottich bzw Gärtank und setzt (Brauerei-) Hefe hinzu. Dann beginnt die alkoholische Gärung. Nach der Gärung lagert das Bier zur Reifung einige Zeit in Tanks und anschließend wird es in Flaschen und Fässern abgefüllt. Darin gelangt es über den Handel oder die Gastronomie zum Kunden.

In einer Fermentationsanlage 4 werden die festen Bestandteile der Maische (Stofffraktion mit erhöhtem Feststoffgehalt) abgefiltert und als Substrat für den sich anschließenden Prozess der Produktion eines Pilzmycels durch Fermentation mittels Basidiomyceten in einem Fermenter genutzt (unterer Strang).

Der Eingang 4.1 der Fermentationsanlage 4 ist über eine Einrichtung zum Transportieren 5 in Form einer Rohrleitung mit dem Ausgang 2.2 der Einrichtung zum Fraktionieren 2 für Treber verbunden.

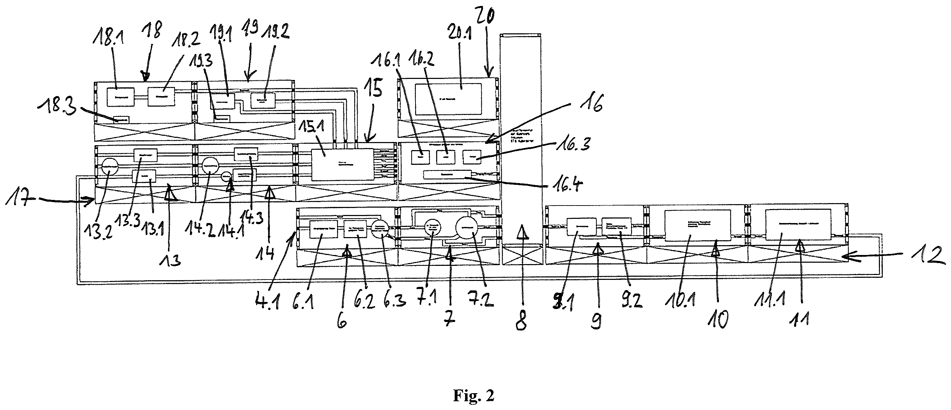

In Fig. 2 ist eine Aufteilung der verschiedenen Komponenten einer Fermentationsanlage 5 auf Container gezeigt. Jedes große rechteckige Kästchen versinnbildlicht einen standardisierten Container. Innerhalb der Container sind mittels kleiner rechteckiger Kästchen oder Kreisen Komponenten der Fermentationsanlage dargestellt. Leitungen sind jeweils durch ein Paar paralleler Linien symbolisiert. Schnittstellen in den Außenwänden der Container zum Verbinden mit Containern oder Leitungen sind durch geschwärzte Kästchen versinnbildlicht.

In der untersten Ebene sind von links nach rechts ein Vorbereitungscontainer 6, ein Vorfermentationscontainer 7, ein Hauptfermentationscontainer 8, ein Produktaufbereitungscontainer 9, ein Flüssigkeitsaufbereitungscontainer 10 und ein Abwasseraufbereitungscontainer 11 dargestellt. Die genannten Container sind auf den Boden 12 aufgesetzt, wobei lediglich der Hauptfermentationscontainer 8 vertikal mit einer kleinen Stirnfläche auf dem Boden aufgesetzt ist und die übrigen Container horizontal auf dem Boden aufliegen.

Der Vorbereitungscontainer 6 umfasst den Eingang der Fermentationsanlage, der als Schnittstelle in einer Containerwand ausgebildet ist. Im Vorbereitungscontainer ist eine Einrichtung zum Zerkleinern 6.1 des Trebers, ein Pufferbehälter 6.2 für den zerkleinerten Treber und eine Einrichtung zur thermischen Behandlung 6.3 des Trebers und von Wasser zum Verdünnen des Trebers angeordnet. Über Leitungen ist die Einrichtung zum Zerkleinern 6.1 eingangsseitig mit dem Eingang und ausgangseitig mit dem Pufferbehälter 6.1 für den Treber verbunden. Über weitere Leitungen ist der Pufferbehälter 6.1 für den Treber ausgangsseitig mit der Einrichtung zur thermischen Behandlung 6.3 und ist diese ausgangsseitig mit einer Schnittstelle für den vorbereiteten Treber in der Containerwand gegenüber der Containerwand mit dem Eingang verbunden.

In der Containerwand mit dem Eingang ist eine Schnittstelle für die Einspeisung von unbehandeltem Wasser und in der gegenüberliegenden Containerwand ist eine weitere Schnittstelle für die Abgabe von thermisch behandeltem Wasser vorhanden. Die erstgenannte Schnittstelle ist über eine Leitung mit einem Eingang der Einrichtung zur thermischen Behandlung verbunden und die zweitgenannte Schnittstelle ist über eine Leitung mit dem Ausgang der Einrichtung zur thermischen Behandlung 6.3 verbunden.

Der Vorfermentationscontainer 7 enthält einen kleinen Fermenter 7.1 für eine Vorkultur und einen größeren Vorfermenter 7.2 zur Erzeugung eines Inokulats. Der Vorfermentationscontainer 7 umfasst in einer Containerwand Schnittstellen für die Einspeisung von vorbehandeltem Treber und von vorbehandeltem Wasser. In einer gegenüberliegenden Containerwand umfasst er Schnittstellen für die Abgabe von vorbehandeltem Treber, Inokulat und vorbehandeltem Wasser. Die Schnittstellen für die Einspeisung von vorbehandeltem Treber und vorbehandeltem Wasser sind über Leitungen mit dem Eingang des kleinen Fermenters 7.1 und des Vorfermenters 7.2 verbunden. Der kleine Fermenter 7.1 ist ausgangsseitig mit der Leitung zum Leiten des vorbehandelten Wassers in den Vorfermenter 7.2 verbunden. Der Vorfermenter 7.2 ist ausgangsseitig über eine Leitung mit der Schnittstelle für den Austritt von Inokulat verbunden. Die Leitungen für vorbehandelten Treber und für vorbehandeltes Wasser sind mit den Schnittstellen für den Auslass von vorbehandeltem Treber und vorbehandeltem Wasser verbunden.

Der Hauptfermentationscontainer 8 ist auf der Basis eines standardisierten Tankcontainers ausgebildet. Der Tankcontainer weist in einem seitlich offenen Containerrahmen einen großen Tank auf, der als Hauptfermenter genutzt wird. Der Tankcontainer ist zusätzlich mit einem Rührwerk und einer Einrichtung zur Temperierung versehen, die in der Abbildung nicht gezeigt sind. Der Hauptfermentationscontainer weist auf einer Seite der Containerwand Schnittstellen für die Einspeisung von vorbehandeltem Treber, Inokulat und vorbehandeltem Wasser auf. Diese eingangsseitigen Schnittstellen sind mit den ausgangsseitigen Schnittstellen des Vorfermentationscontainers 7 verbunden. Die genannten Schnittstellen sind entweder direkt oder über Leitungen miteinander verbunden.

In einer der Seite mit den eingangsseitigen Schnittstellen gegenüberliegenden Seite weist der Hauptfermentationscontainer 8 eine Schnittstelle für den Auslass von feuchtem Pilzmycel auf.

Der Produktaufbereitungscontainer 9 weist in einer Containerwand eine Schnittstelle für feuchtes Pilzmycel und in einer gegenüberliegenden Containerwand Schnittstellen für entwässertes Endprodukt und für Flüssigkeit aus der Entwässerung auf. Im Produktaufbereitungscontainer ist eine Einrichtung zur Entwässerung 9.1 und eine Einrichtung für ein finales *downstream processsing* 9.2 angeordnet. Die Einrichtung zur Entwässerung 9.1 ist eingangsseitig über eine Leitung mit der Schnittstelle für feuchtes Pilzmycel des Hauptfermentationscontainers 8 und ausgangsseitig über Leitungen mit der Einrichtung für das finale *downstream processing* 9.2 und mit der Schnittstelle für die abgetrennte Flüssigkeit verbunden. Die Einrichtung für das finale *downstream processing* 9.2 ist ausgangsseitig über eine Leitung mit der Schnittstelle für das entwässertes Pilzmycel verbunden. Die Schnittstelle für das feuchte Pilzmycel ist direkt oder über Leitungen mit der Schnittstelle für das Pilzmycel des Hauptfermentationscontainers 8 verbunden.

Der Flüssigkeitsaufbereitungscontainer 10 weist in einer Containerwand eine Schnittstelle für die Einspeisung der abgetrennten Flüssigkeit und in der gegenüberliegenden Containerwand eine Schnittstelle für die Abgabe von Abwasser auf. Der Flüssigkeitsaufbereitungscontainer umfasst eine Einrichtung zur Aufbereitung 10.1 der abgetrennten Flüssigkeit, die eine Zentrifuge, eine Ultrafiltration und einen Sammeltank umfasst. Die Einrichtung zur Aufarbeitung 10.1 der abgetrennten Flüssigkeit ist eingangsseitig über eine Leitung mit der Schnittstelle für die Einspeisung der abgetrennten Flüssigkeit und ausgangsseitig über eine Leitung mit der Schnittstelle für das Abwasser verbunden. Der Flüssigkeitsaufbereitungscontainer 10 ist mit der Schnittstelle für die Einspeisung der abgetrennten Flüssigkeit direkt oder über eine Rohrleitung mit der Schnittstelle für die Abgabe von abgetrennter Flüssigkeit des Produktaufbereitungscontainers 9 verbunden.

Der Abwasserreinigungscontainer 11 weist in einer Containerwand eine Schnittstelle für die Einspeisung von Abwasser und in der gegenüberliegenden Containerwand eine Schnittstelle für die Abgabe von Reinwasser auf. In dem Abwasseraufbereitungscontainer ist eine Einrichtung für die biologische und/oder mechanische Abwasseraufbereitung 11.1 angeordnet. Diese ist über Leitungen eingangsseitig mit der Schnittstelle für die Einspeisung von Abwasser und ausgangsseitig mit der Schnittstelle für die Abgabe von Reinwasser verbunden.

In der zweiten Ebene weist die Fermentationsanlage 5 von links nach rechts einen Hilfsmediencontainer 13, einen Hilfsmedienaufbereitungscontainer 14, einen Verteilcontainer 15 und einen Reinigungscontainer 16 auf. Die Container in der zweiten Ebene sind entweder auf eine Tragkonstruktion 17 oberhalb der Container in der untersten Ebene aufgesetzt oder sind direkt auf die Container der untersten Ebene aufgesetzt.

Der Hilfsmediencontainer 13 weist in einer Containerwand Schnittstellen für den Einlass von Reinwasser, Luft und Leitungswasser auf. In der gegenüberliegenden Containerwand weist er Schnittstellen für den Auslass von Wasser, Druckluft und von Wasserdampf auf. Innerhalb des Hilfsmediencontainers sind ein Wassertank 13.1, ein Drucklufterzeuger 13.2 und ein Dampferzeuger 13.3 angeordnet, die über Leitungen eingangsseitig mit den Schnittstellen für das jeweilige Medium in der erstgenannten Containerwand und ausgangsseitig mit den Schnittstellen für das jeweilige Medium in der zweitgenannten Containerwand verbunden sind.

Der Hilfsmedienaufbereitungscontainer 14 weist in einer ersten Containerwand Schnittstellen für den Einlass von Wasser, Druckluft und von Wasserdampf auf. In einer gegenüberliegenden Containerwand weist er Schnittstellen für aufbereitetes Wasser, Druckluft und Wasserdampf auf. In dem Hilfsmedienaufbereitungscontainer 14 sind Einrichtungen zum Aufbereiten 14.1 von Wasser (z.B. Vorfiltrations- und Hauptfiltrationseinrichtungen), eine Einrichtung zur Druckluftaufbereitung 14.2 und eine Einrichtung zur Dampfaufbereitung 14.3 angeordnet. Diese sind über Leitungen eingangsseitig mit den Schnittstellen für die entsprechenden Medien in der erstgenannten Containerwand und ausgangsseitig mit den Schnittstellen für die entsprechenden Medien in der zweitgenannten Containerwand verbunden. Die erstgenannten Schnittstellen sind direkt oder über Leitungen mit den ausgangsseitigen Schnittstellen des Hilfsmediencontainers 13 verbunden.

Der Verteilcontainer 15 weist in einer Containerwand Schnittstellen für die Einspeisung von aufbereitetem Wasser, Druckluft und Wasserdampf auf. In einer gegenüberliegenden Containerwand weist er Schnittstellen für die Abgabe von Wasser, Druckluft, Dampf, Kälteträgermedium, Wärmeträgermedium und elektrischem Strom auf. In einer weiteren Containerwand weist er Schnittstellen für die Einspeisung von Kälteträgermedium, Wärmeträgermedium und elektrischem Strom auf.

Im Verteilcontainer 15 sind Leitungen und Rohrverzweigungen einer zentralen Medienverteilung 15.1 angeordnet, welche die eingangsseitigen Schnittstellen mit den ausgangsseitigen Schnittstellen verbinden. Der Verteilcontainer ist über die erstgenannten Schnittstellen direkt oder über Leitungen mit den ausgangsseitigen Schnittstellen des Hilfsmedienaufbereitungscontainers 14 verbunden. Die ausgangsseitigen Schnittstellen über nicht gezeigte Leitungen mit den Containern verbunden, die einen Bedarf für die jeweiligen Medien haben. So sind beispielsweise die Ausgänge für das Kälteträger- und das Wärmeträgermedium mit einer Temperierungseinrichtung des Hauptfermentationscontainers 8 verbunden, um eine gewünschte Temperatur im Hauptfermenter einzustellen.

Der Reinigungscontainer 16 weist in einer Containerwand eine Schnittstelle für Reinigungsflüssigkeit auf. Im Reinigungscontainer sind Kanister und/oder Tanks mit Säure, Lauge und Wasser 16.1, 16.2, 16.3 angeordnet sowie ein Mischbehälter 16.4 zum Mischen dieser Flüssigkeiten zu einer Reinigungsflüssigkeit. Der Mischbehälter 16.4 ist ausgangsseitig über eine Leitung mit einer Schnittstelle in der Containerwand verbunden. Die Schnittstelle ist über nicht gezeigte Leitungen mit Containern verbunden, bei denen Bedarf für eine Reinigung besteht.

In der dritten Ebene sind von links nach rechts ein Energiecontainer 18, ein Temperierungscontainer 19 und ein Steuerungscontainer 20 angeordnet. Diese Container sind auf eine Tragkonstruktion 21 oberhalb der Container in der zweiten Ebene oder sind direkt auf Container in der zweiten Ebene aufgesetzt.

Der Energiecontainer 18 weist in einer Containerwand eine Schnittstelle für elektrischen Strom auf. Im Energiecontainer ist ein Stromgenerator 18.1, ein Stromspeicher 18.2 und ein Schaltschrank 18.3 angeordnet. Stromgenerator, Stromspeicher, Schaltschrank und Schnittstelle sind über Kabel miteinander verbunden.

Der Temperierungscontainer 19 weist in einer Containerwand eine Schnittstelle für die Einspeisung von elektrischem Strom und in einer gegenüberliegenden Containerwand Schnittstellen für die Abgabe von elektrischem Strom sowie die Abgabe von Wärmeträgermedium und Kälteträgermedium auf. Im Temperierungscontainer sind eine Wärmeanlage 19.1 und eine Kälteanlage 19.2 angeordnet, die über Leitungen mit den vorbezeichneten Schnittstellen für Kälteträgermedium und Wärmeträgermedium verbunden sind. Ferner ist im Temperierungscontainer ein Schaltschrank 19.3 zur Steuerung der Wärmeanlage und Kälteanlage angeordnet. Der Temperierungscontainer 19 ist über seine eingangsseitige Schnittstelle entweder direkt oder über Kabel mit der ausgangsseitigen Schnittstelle des Energiecontainers verbunden. Seine ausgangsseitige Schnittstelle für elektrischen Strom ist über Kabel mit der entsprechenden Schnittstelle des Verteilcontainers 15 verbunden und die Schnittstellen für das Kälteträgermedium und das Wärmeträgermedium sind über Leitungen mit den eingangsseitigen Schnittstellen für die entsprechenden Medien des Verteilcontainers 15 verbunden.

Der Steuerungscontainer 20 umfasst eine elektronische Datenverarbeitungsanlage 20.1 und Einrichtungen zum Steuern 20.2 von Anlagenkomponenten. Ferner weist er Schnittstellen für elektrischen Strom und Daten auf. Die Schnittstellen sind über nicht gezeigte Kabel mit den entsprechenden Schnittstellen der übrigen Container verbunden.

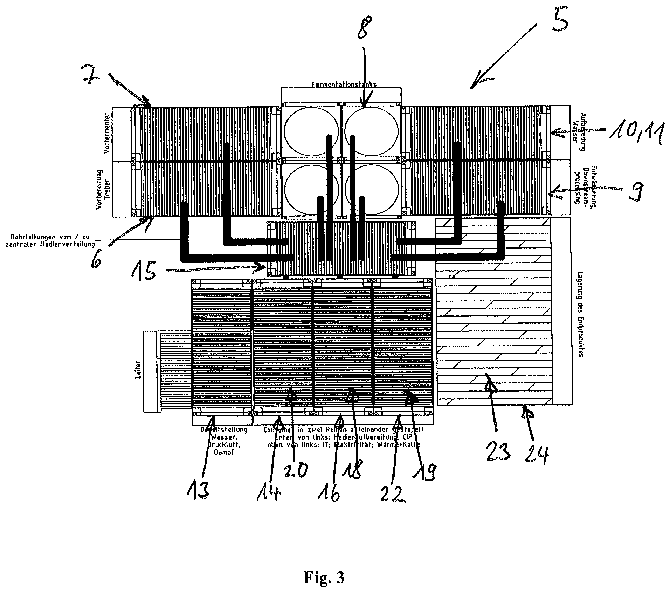

Gemäß Fig. 3 ist der Verteilcontainer 15 zentral angeordnet. Vor dem Verteilcontainer 15 befinden sich in zwei Reihen aufeinandergestapelt unten von links nach rechts der Hilfsmediencontainer 13, der Hilfsmedienaufbereitungscontainer 14, der Reinigungscontainer 16, ein Laborcontainer 22 und oben von links nach rechts der Steuerungscontainer 20, der Energiecontainer 18 und der Temperierungscontainer 19. Diese Container sind mit ihren Längsachsen senkrecht zum Verteilcontainer ausgerichtet.

Links hinter dem Verteilcontainer 15 sind parallel zu diesem jeweils zwei Vorbereitungscontainer 6 und Vorfermentationscontainer 7 in zwei Ebenen übereinander angeordnet.

Hinter dem Verteilcontainer sind vier Hauptfermentationscontainer 8 mit vertikalen Hauptachsen in zwei Reihen nebeneinander angeordnet.

Rechts hinter dem Verteilcontainer 15 sind parallel zu diesem zwei Produktaufbereitungscontainer 9, der Flüssigkeitsaufbereitungscontainer 10 und der Abwasseraufbereitungscontainer 11 in zwei Ebenen übereinander angeordnet. Ferner sind symbolisch ein Teil der Rohrleitungen vom Verteilcontainer 15 zu verschiedenen anderen Containern eingetragen.

Rechts neben dem Verteilcontainer 15 und den Containern in der vorderen Reihe befindet sich ein Lagerungsbereich 23 für die Lagerung des Endproduktes, in dem Produktlagercontainer 24, beispielsweise Standardcontainer oder Kühlcontainer, angeordnet sind.

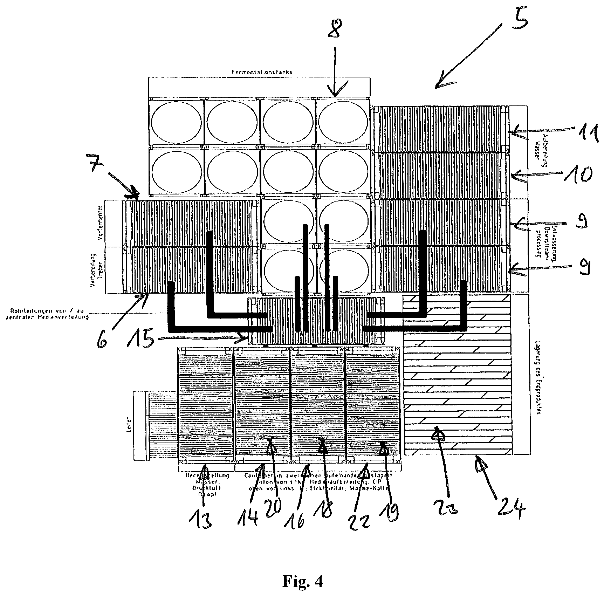

Die Fermentationsanlage von Fig. 4 unterscheidet sich von der zuvor beschriebenen dadurch, dass anstatt von nur vier Hauptfermentationscontainern 8 zwölf Hauptfermentationscontainer 8 und eine größere Anzahl Produktaufbereitungscontainer 9, Flüssigkeitsaufbereitungscontainer 10 und Abwasseraufbereitungscontainer 11 vorhanden sind, um größere Ausbringungsmengen zu erreichen.

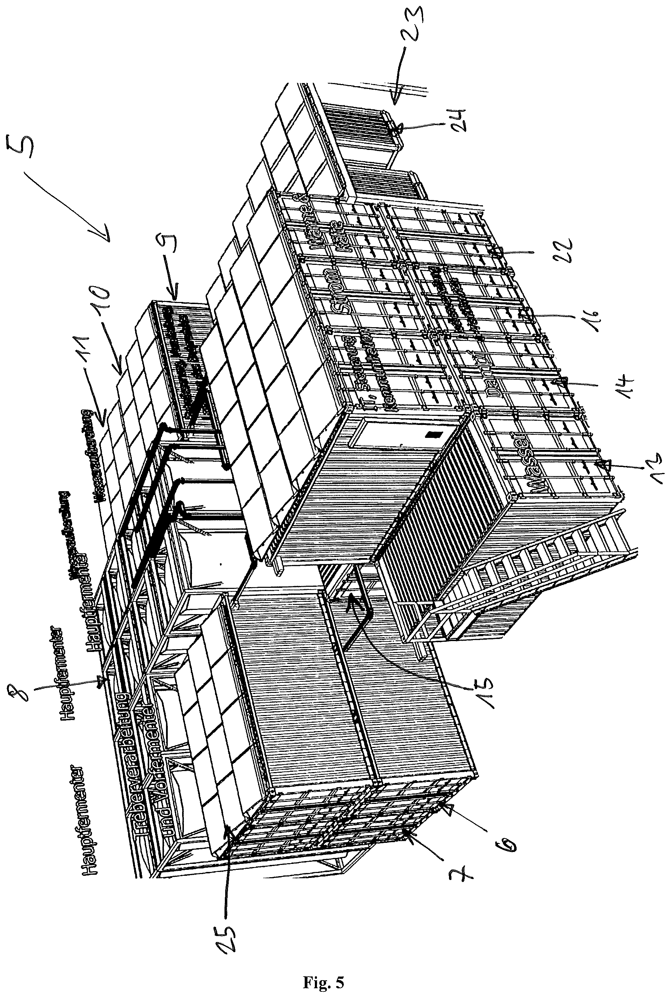

Die Anordnung der Container in mehreren Ebenen ist durch Fig. 5 veranschaulicht. Auf den obersten Containern sind zusätzlich PV-Panels 25 angeordnet, die den Energiecontainer 18 mit elektrischem Strom versorgen.

### Bezugszeichenliste

- 1: Einrichtung zum Herstellen einer Maische
- 2: Einrichtung zum Fraktionieren der Maische
- 3: Einrichtung zum Herstellen von Bier
- 4: Fermentationsanlage
- 5: Einrichtung zum Transportieren
- 6: Vorbereitungscontainer
- 7: Vorfermentationscontainer
- 8: Hauptfermentationscontainer
- 9: Produktaufbereitungscontainer
- 10: Flüssigkeitsaufbereitungscontainer
- 11: Abwasseraufbereitungscontainer
- 12: Boden
- 13: Hilfsmediencontainer
- 14: Hilfsmedienaufbereitungscontainer
- 15: Verteilcontainer
- 16: Reinigungscontainer
- 17: Tragkonstruktion
- 18: Energiecontainer
- 19: Temperierungscontainer
- 20: Steuerungscontainer
- 21: Tragkonstruktion
- 22: Laborcontainer
- 23: Lagerungsbereich
- 24: Produktlagercontainer
- 25: PV-Panel

## Patentansprüche

1. Anlage zum Herstellen von Bier oder einem anderen Getränk und eines proteinhaltigen Produktes auf der Basis von Getreide mit den folgenden Bestandteilen:
• eine Brauanlage, umfassend eine Einrichtung zum Herstellen einer Maische (1) aus vermälztem und/oder unvermälztem Getreide, eine Einrichtung zum Fraktionieren der Maische (2) in eine erste Stofffraktion mit geringem Feststoffgehalt und in eine zweite Stofffraktion mit hohem Feststoffgehalt, eine Einrichtung zum Herstellen von Bier (3) oder einem anderen Getränk aus der ersten Stofffraktion und einem Ausgang für die zweite Stofffraktion,
• eine Fermentationsanlage (4) zum Herstellen eines proteinhaltigen Produktes auf der Basis von Getreide, umfassend einen Eingang für die zweite Stofffraktion, eine Einrichtung zum Inokulieren der zweiten Stofffraktion mit einem Pilzinokulat von Basidiomyceten und eine Einrichtung zum Fermentieren der inokulierten Stofffraktion in einer Submerskultur,
• eine Einrichtung zum Transportieren (5) der zweiten Stofffraktion vom Ausgang (2.1) der Brauanlage zum Eingang (4.1) der Fermentationsanlage,
• **dadurch gekennzeichnet, dass**
• die Fermentationsanlage zumindest teilweise in einem oder mehreren Containern untergebracht ist und
• die Brauanlage eine ortsfeste Brauanlage ist.

2. Anlage nach Anspruch 1, bei der jeder Container mindestens eine definierte Schnittstelle zum Verbinden mit einem anderen Container der Fermentationsanlage (4) hat.

3. Anlage nach Anspruch 1 oder 2, bei der die Fermentationsanlage (4) ein oder mehrere Container derselben Art umfasst, wobei die Anzahl Container gewählt ist, um den Durchsatz der Fermentationsanlage an die von der Brauanlage gelieferte Ausbringungsmenge der zweiten Stofffraktion anzupassen und/oder um die Ausbringungsmenge der Fermentationsanlage an eine vorgegebene Ausbringungsmenge des proteinhaltigen Produktes anzupassen.

4. Anlage zum Herstellen nach einem der Ansprüche 1 bis 3, bei der die Anlage zum Herstellen eines proteinhaltigen Produktes mindestens einen der nachfolgenden Container umfasst:
• Container zum Vorbereiten der zweiten Stofffraktion für die Fermentation (Vorbereitungscontainer (6)),
• Container zum Herstellen eines Inokulats zum Animpfen einer Hauptfermentation (Vorfermentationscontainer (7)),
• Container zum Durchführen der Hauptfermentation mittels des Inokulats und der zweiten Stofffraktion (Hauptfermentationscontainer (8)),
• Container für die Entwässerung und/oder andere finale Behandlung des feuchten Pilzmycels aus der Hauptfermentation (Produktaufbereitungscontainer (9)),
• Container zum Lagern des Endprodukts (Produktlagercontainer (24)),
• Container zum Aufbereiten von Flüssigkeit aus der finalen Behandlung des feuchten Pilzmycels (Flüssigkeitsaufbereitungscontainer (10)),
• Container für Wasser, Dampf, Druckluft und/oder andere Medien für den Produktionsprozess (Hilfsmediencontainer (13)),
• Container für die Aufbereitung von Wasser, Druckluft, Dampf und/oder anderer Medien für die Herstellung des proteinhaltigen Produktes (Hilfsmedienaufbereitungscontainer (14)),
• Container für die Erzeugung und/oder Speicherung von Elektrizität (Energiecontainer (18)),
• Container mit einer Wärme- und/oder Kälteanlage (Temperierungscontainer (19)),
• Container mit Einrichtungen für eine CIP-Reinigung (Reinigungscontainer (16)),
• Container für eine Verteilung von Medien und/oder Energie und/oder Kommunikationssignalen (Verteilcontainer (15)),
• Container zum Zwischenspeichern der zweiten Stofffraktion (Puffercontainer),
• Container für die Steuerung der Fermentationsanlage und/oder für die Kommunikation mit einer von der Fermentationsanlage räumlich getrennten externen Steuerungszentrale (Steuerungscontainer (20)),
• Container für die Messung und Kontrolle von Eigenschaften der Ausgangsprodukte, Zwischenprodukte und/oder Endprodukte der Fermentationsanlage (Laborcontainer (22)).

5. Anlage nach einem der Ansprüche 1 bis 4, bei der der Steuerungscontainer (20) ausgebildet ist, an die externe Steuerungszentrale in Echtzeit Daten über den Zustand der Medien in der Fermentationsanlage und/oder von einer oder mehreren Komponenten der Anlage zu liefern.

6. Anlage nach Anspruch 4 oder 5 umfassend eine externe Steuerungszentrale.

7. Anlage nach Anspruch 6, bei der die Steuerungszentrale ausgebildet ist, mithilfe der vom der Steuerungscontainer gelieferten Daten die Produkte, Medien, Maschinen, Prozesse und/oder die gesamte Produktion in der Fermentationsanlage (4) zu simulieren.

8. Anlage nach an der Ansprüche 1 bis 7, umfassend eines oder mehrere der folgenden Merkmale:
• mehrere Container sind nebeneinander und/oder übereinander angeordnet,
• mehrere Container sind um einen oder mehrere Mediencontainer herum angeordnet,
• mehrere Container sind parallel nebeneinander angeordnet,
• ein oder mehrere Container sind horizontal und/oder bei der ein oder mehrere Container vertikal ausgerichtet,
• mehrere Container sind in Gruppen nebeneinander angeordnet.

9. Anlage nach einem der Ansprüche 1 bis 8, bei der der Vorfermentationscontainer (7) und/oder der Hauptfermentationscontainer (8) ein Tankcontainer ist oder auf der Basis eines Tankcontainers ausgebildet ist.

10. Anlage nach einem der Ansprüche 1 bis 9, bei der mindestens ein Container ein 20 Fuß-Container und/oder mindestens ein Container ein 40 Fuß-Container und/oder mindestens ein Container ein 45 Fuß-Container nach ISO-Norm 668 ist.

11. Anlage nach einem der Ansprüche 1 bis 10, bei der die Fermentationsanlage (4) zumindest teilweise auf Lkw-Plätzen für den Abtransport von Treber oder einer anderen Brauereinebenstroms neben der Brauanlage platziert ist.

12. Anlage nach einem der Ansprüche 1 bis 11, bei der der Ausgang der Auslass eines Läuterbottichs für Treber oder der Auslass eines Trebersilos ist.

13. Anlage nach einem der Ansprüche 1 bis 12, bei der der Ausgang für die zweite Stofffraktion der Brauanlage über eine Rohrleitung (5) und/oder eine Pumpe und/oder einen Pufferbehälter mit dem Einlass für die zweite Stofffraktion der Fermentationsanlage (4) verbunden ist.

14. Anlage nach einem der Ansprüche 1 bis 13, bei der die Einrichtung zum Transportieren der zweiten Stofffraktion vom Ausgang der Brauanlage zum Eingang der Fermentationanlage (4) ein oder mehrere Transportfahrzeuge umfasst.

15. Anlage nach einem der Ansprüche 1 bis 14, bei der der Ausgang der Brauanlage über einen Pufferbehälter mit dem Eingang der Fermentationsanlage (4) verbunden ist, der Einrichtungen zum keimfrei machen der zweiten Stofffraktion umfasst.

16. Anlage nach einem der Ansprüche 1 bis 15, bei der der Container im oberen Bereich Leitungen für Medien und/oder Energie und/oder Kommunikation und/oder in der Außenwand eine oder mehrere Schnittstellen zum Verbinden der Leitungen mit weiteren Containern und/oder im unteren Bereich Aggregate für die Produktion, Lagerbehälter, Steuerungseinrichtungen und/oder eine elektronische Datenverarbeitungsanlage umfasst.

## Claims

1. Plant for producing beer or another beverage and a protein-containing product based on cereal with the following components:
• a brewing plant, comprising a device for producing a mash (1) from malted and/or unmalted cereal, a device for fractionating the mash (2) into a first material fraction with low solids content and into a second material fraction with high solids content, a device for producing beer (3) or another beverage from the first material fraction and an outlet for the second material fraction,
• a fermentation plant (4) for producing a protein-containing product based on cereal, comprising an inlet for the second material fraction, a device for inoculating the second material fraction with a fungal inoculum of Basidiomycetes and a device for fermenting the inoculated material fraction in a submerged culture,
• a device for transporting (5) the second material fraction from the outlet (2.1) of the brewing plant to the inlet (4.1) of the fermentation plant,
• **characterized in that**
• the fermentation plant is accommodated at least partially in one or more containers
and
• the brewing plant is a stationary brewing plant.

2. Plant according to claim 1, wherein each container has at least one defined interface for connecting to another container of the fermentation plant (4).

3. Plant according to claim 1 or 2, wherein the fermentation plant (4) comprises one or more containers of the same type, wherein the number of containers is selected to adapt the throughput of the fermentation plant to the output quantity of the second material fraction supplied by the brewing plant and/or to adapt the output quantity of the fermentation plant to a predetermined output quantity of the protein-containing product.

4. Manufacturing plant according to any one of claims 1 to 3, wherein the plant for producing a protein-containing product comprises at least one of the following containers:
• container for preparing the second material fraction for fermentation (preparation container (6)),
• container for producing an inoculum for inoculating a main fermentation (pre-fermentation container (7)),
• container for carrying out the main fermentation by means of the inoculum and the second material fraction (main fermentation container (8)),
• container for the dewatering and/or other final treatment of the moist fungal mycelium from the main fermentation (product processing container (9)),
• container for storing the end product (product storage container (24)),
• container for processing liquid from the final treatment of the moist fungal mycelium (liquid processing container (10)),
• container for water, steam, compressed air and/or other media for the production process (auxiliary media container (13)),
• container for the processing of water, compressed air, steam and/or other media for the production of the protein-containing product (auxiliary media processing container (14)),
• container for the generation and/or storage of electricity (energy container (18)),
• container with a heating and/or cooling system (temperature control container (19)),
• container with devices for CIP cleaning (cleaning container (16)),
• container for a distribution of media and/or energy and/or communication signals (distribution container (15)),
• container for temporarily storing the second material fraction (buffer container),
• container for the control of the fermentation plant and/or for communication with an external control center spatially separated from the fermentation plant (control container (20)),
• container for the measurement and checking of properties of the starting products, intermediate products and/or end products of the fermentation plant (laboratory container (22)).

5. Plant according to any one of claims 1 to 4, wherein the control container (20) is designed to supply data about the state of the media in the fermentation plant and/or of one or more components of the plant to the external control center in real time.

6. Plant according to claim 4 or 5 comprising an external control center.

7. Plant according to claim 6, wherein the control center is designed to simulate the products, media, machines, processes and/or the entire production in the fermentation plant (4) with the aid of the data supplied by the control container.

8. Plant according to any one of claims 1 to 7, comprising one or more of the following features:
• multiple containers are arranged next to one another and/or one above the other,
• multiple containers are arranged around one or more media containers,
• multiple containers are arranged parallel next to one another,
• one or more containers are aligned horizontally and/or wherein one or more containers are aligned vertically,
• multiple containers are arranged in groups next to one another.

9. Plant according to any one of claims 1 to 8, wherein the pre-fermentation container (7) and/or the main fermentation container (8) is a tank container or is designed on the basis of a tank container.

10. Plant according to any one of claims 1 to 9, wherein at least one container is a 20-foot container and/or at least one container is a 40-foot container and/or at least one container is a 45-foot container according to ISO standard 668.

11. Plant according to any one of claims 1 to 10, wherein the fermentation plant (4) is placed at least partially on truck spaces for the removal of spent grains or another brewery side stream next to the brewing plant.

12. Plant according to any one of claims 1 to 11, wherein the outlet is the outlet of a lauter tun for spent grains or the outlet of a spent grain silo.

13. Plant according to any one of claims 1 to 12, wherein the outlet for the second material fraction of the brewing plant is connected to the inlet for the second material fraction of the fermentation plant (4) via a pipeline (5) and/or a pump and/or a buffer vessel.

14. Plant according to any one of claims 1 to 13, wherein the device for transporting the second material fraction from the outlet of the brewing plant to the inlet of the fermentation plant (4) comprises one or more transport vehicles.

15. Plant according to any one of claims 1 to 14, wherein the outlet of the brewing plant is connected to the inlet of the fermentation plant (4) via a buffer vessel which comprises devices for sterilizing the second material fraction.

16. Plant according to any one of claims 1 to 15, wherein the container comprises lines for media and/or energy and/or communication in the upper region and/or one or more interfaces for connecting the lines to further containers in the outer wall and/or units for production, storage vessels, control devices and/or an electronic data processing system in the lower region.

## Revendications

1. Installation pour la production de bière ou d'une autre boisson et d'un produit protéinique à partir de céréales, dotée des composants suivants :
• une installation de brassage, comportant un dispositif de production d'un moût (1) à partir de céréales maltées et/ou non maltées, un dispositif de fractionnement du moût (2) en une première fraction de matière présentant une faible teneur en solides et une deuxième fraction de matière présentant une teneur élevée en solides, un dispositif de production de bière (3) ou d'une autre boisson à partir de la première fraction de matière et une sortie pour la deuxième fraction de matière,
• une installation de fermentation (4) pour la production d'un produit protéinique à partir de céréales, comportant une entrée pour la deuxième fraction de matière, un dispositif d'inoculation de la deuxième fraction de matière avec un inoculum fongique de basidiomycètes et un dispositif de fermentation de la fraction de matière inoculée dans une culture immergée,
• un dispositif de transport (5) de la deuxième fraction de matière à partir de la sortie (2.1) de l'installation de brassage vers l'entrée (4.1) de l'installation de fermentation,
• **caractérisée en ce que**
• l'installation de fermentation (4) est placée au moins partiellement dans un ou plusieurs conteneurs et
• l'installation de brassage est une installation de brassage fixe.

2. Installation selon la revendication 1, dans laquelle chaque conteneur possède au moins une interface définie pour le raccordement à un autre conteneur de l'installation de fermentation (4).

3. Installation selon la revendication 1 ou 2, dans laquelle l'installation de fermentation (4) comporte un ou plusieurs conteneurs du même genre, dans laquelle le nombre de conteneurs est sélectionné de manière à adapter le débit de l'installation de fermentation au volume de production de la deuxième fraction de matière délivré par l'installation de brassage et/ou de manière à adapter le volume de production de l'installation de fermentation à un volume de production prédéfini du produit protéinique.

4. Installation de production selon l'une des revendications 1 à 3, dans laquelle l'installation pour la production d'un produit protéinique comporte au moins l'un des conteneurs suivants :
• conteneur pour la préparation de la deuxième fraction de matière pour la fermentation (conteneur de préparation (6)),
• conteneur pour la production d'un inoculum destiné à l'ensemencement d'une fermentation principale (conteneur de pré-fermentation (7)),
• conteneur pour l'exécution de la fermentation principale au moyen de l'inoculum et de la deuxième fraction de matière (conteneur de fermentation principale (8)),
• conteneur pour la déshydratation et/ou le traitement final du mycélium de champignon à partir de la fermentation principale (conteneur de préparation de produit (9)),
• conteneur pour le stockage du produit final (conteneur de stockage de produit (24)),
• conteneur pour la préparation de fluide à partir du traitement final du mycélium de champignon humide (conteneur de préparation de fluide (10)),
• conteneur pour l'eau, la vapeur, l'air comprimé et/ou d'autres milieux destinés au processus de production (conteneur de milieux adjuvants (13)),
• conteneur pour la préparation d'eau, d'air comprimé, de vapeur et/ou d'autres milieux destinés à la production du produit protéinique (conteneur de préparation de milieux adjuvants (14)),
• conteneur pour la fabrication et/ou le stockage d'électricité (conteneur d'énergie (18)),
• conteneur doté d'une installation thermique et/ou frigorifique (conteneur de mise à température (19)),
• conteneur doté de dispositifs destinés à un nettoyage NEP (conteneur de nettoyage (16)),
• conteneur pour une distribution de milieux et/ou d'énergie et/ou de signaux de communication (conteneur de distribution (15)),
• conteneur pour le stockage intermédiaire de la deuxième fraction de matière (conteneur tampon),
• conteneur pour la commande de l'installation de fermentation et/ou pour la communication avec une centrale de commande externe spatialement séparée de l'installation de fermentation (conteneur de commande (20)),
• conteneur pour la mesure et le contrôle de propriétés des produits initiaux, des produits intermédiaires et/ou des produits finaux de l'installation de fermentation (conteneur de laboratoire (22)).

5. Installation selon l'une des revendications 1 à 4, dans laquelle le conteneur de commande (20) est conçu pour fournir des données en temps réel à la centrale de commande, concernant l'état des milieux dans l'installation de fermentation et/ou d'un ou de plusieurs composants de l'installation.

6. Installation selon la revendication 4 ou 5, comportant une centrale de commande externe.

7. Installation selon la revendication 6, dans laquelle la centrale de commande est conçue pour simuler les produits, les milieux, les machines, les processus et/ou l'ensemble de la production dans l'installation de fermentation (4) à l'aide des données fournies par le conteneur de commande.

8. Installation selon l'une des revendications 1 à 7, comportant l'une ou plusieurs des caractéristiques suivantes :
• plusieurs conteneurs sont disposés côte à côte et/ou les uns au-dessus des autres,
• plusieurs conteneurs sont disposés autour d'un ou de plusieurs conteneurs de milieux,
• plusieurs conteneurs sont disposés parallèlement les uns aux autres,
• un ou plusieurs conteneurs sont orientés horizontalement et/ou un ou plusieurs conteneurs sont orientés verticalement,
• plusieurs conteneurs sont disposés en groupes côte à côte.

9. Installation selon l'une des revendications 1 à 8, dans laquelle le conteneur de pré-fermentation (7) et/ou le conteneur de fermentation principale (8) est/sont un conteneur citerne ou est/sont conçu(s) sur la base d'un conteneur citerne.

10. Installation selon l'une des revendications 1 à 9, dans laquelle au moins un conteneur est un conteneur de 20 pieds et/ou au moins un conteneur est un conteneur de 40 pieds et/ou au moins un conteneur est un conteneur de 45 pieds selon la norme ISO 668.

11. Installation selon l'une des revendications 1 à 10, dans laquelle l'installation de fermentation (4) est placée au moins partiellement sur des emplacements de camion pour l'élimination de drêche ou d'un autre flux dérivé du brassage à côté de l'installation de brassage.

12. Installation selon l'une des revendications 1 à 11, dans laquelle la sortie est l'évacuation d'une cuve de filtration pour la drêche ou l'évacuation d'un silo de drêche.

13. Installation selon l'une des revendications 1 à 12, dans laquelle la sortie pour la deuxième fraction de matière de l'installation de brassage est reliée à l'admission pour la deuxième fraction de matière de l'installation de fermentation (4) par le biais d'une tuyauterie (5) et/ou d'une pompe et/ou d'un réservoir tampon.

14. Installation selon l'une des revendications 1 à 13, dans laquelle le dispositif destiné à transporter la deuxième fraction de matière de la sortie de l'installation de brassage vers l'entrée de l'installation de fermentation (4) comporte un ou plusieurs véhicules de transport.

15. Installation selon l'une des revendications 1 à 14, dans laquelle la sortie de l'installation de brassage est reliée à l'entrée de l'installation de fermentation (4) par le biais d'un réservoir tampon, lequel comporte des dispositifs de stérilisation de la deuxième fraction de matière.

16. Installation selon l'une des revendications 1 à 15, dans laquelle le conteneur comporte, dans la région supérieure, des conduites pour des milieux et/ou de l'énergie et/ou une communication et/ou, dans la paroi extérieure, une ou plusieurs interfaces de raccordement des conduites à d'autres conteneurs et/ou, dans la région inférieure, des agrégats pour la production, des réservoirs de stockage, des dispositifs de commande et/ou une installation de traitement de données électronique.
